# EUROPEAN PATENT SPECIFICATION

(11) **EP 2 079 321 B1**
(45) Date of publication and mention of the grant of the patent: **01.05.2013**
(21) Application number: 07838947.5
(22) Date of filing: 27.09.2007
(51) Int. Cl.: A23L 1/226, C07C 233/18, A23G 4/06, A23L 2/56, A23G 3/36

(54) **COOLING CONFECTIONERIES AND BEVERAGES**
KÜHLENDE KONFEKTWAREN UND GETRÄNKE
PRODUITS DE CONFISERIE ET BOISSONS RAFRAÎCHISSANTES

(30) Priority: 27.09.2006 US 827081 P
(43) Date of publication of application: 22.07.2009
(73) Proprietor: Kraft Foods Global Brands LLC, Northfield, IL 60093 (US)
(72) Inventor: LUO, Shiuh, Livingston NJ 07039 (US); CORREA, Beth, Ann, Morristown NJ 07960 (US)
(74) Representative: Wilson Gunn
(86) International application number: PCT/US2007/020866
(87) International publication number: WO 2008/039522

(56) References cited:
- WO-A-2005/048743
- GB-A- 1 421 744
- US-A- 3 644 653
- US-A1- 2005 019 445
- US-A1- 2005 265 930
- US-B1- 7 030 273

## Description

### BACKGROUND OF THE INVENTION

Many confectionery products, particularly those promoted for breath freshening, are mint-flavored products that contain moderate to high levels of menthol. Menthol is also used in breath-freshening beverages. Menthol is well known for its physiological cooling effect on the skin and mucous membranes of the mouth. The "cooling" effect of menthol appears to be a physiological effect arising from the direct action of menthol on the nerve endings responsible for the detection of hot and cold. Menthol directly stimulates cold receptors. In addition to "cooling" effect, menthol also imparts other physiological effects such as "nasal action", "aroma", and "minty taste". However, there are disadvantages associated with using menthol, including its strong minty odor and the harsh notes it imparts to some compositions.

Efforts have been directed to replacing menthol with other compounds to provide substantially the same physiological cooling effects but without the disadvantages of menthol. Some non-menthol compounds providing a physiological effect similar to menthol are described in U.S. Patent No. 4,296,255 of Rowsell et al. Other compounds exhibiting a physiological cooling effect are described in U.S. Patent No. 7,030,273 B1 to Sun.

Very strong flavors such as menthol have often been used to provide a strong initial burst of flavor. Other efforts have also been directed to the development of non-menthol cooling agents that can provide a different release profile in confectioneries. For instance, U.S. Patent No. 5,326,574 of Chapdelaine et al. discloses a process for co-drying the physiological cooling agent 3-L-menthoxypropane-1,2-diol with a food acceptable, water-soluble carrier and mixing the resulting product into chewing gum. U.S. Patent Application Publication No. US 2005/0019445 A1 of Wolf et al. describes a combination of physiological cooling agents to provide a reduced overall concentration of menthol for a menthol-flavored chewing gum.

However, there remains a need for cooling compositions that substantially reduce or completely eliminate menthol. Thus, a need still exists for non-menthol cooling compositions that can be used in confectionery and beverage compositions, either with a reduced menthol amount or no menthol at all, to provide cooling sensations to products in which they are found. It would be advantageous if the agents did not have the unwanted harshness or flavor characteristics that come from adding menthol. It would also be desirable to provide a clean, high-quality flavor with a good cooling effect.

### BRIEF DESCRIPTION OF THE INVENTION

The invention is defined by the claims.

An embodiment is a chewing gum, comprising: an elastomer; a cooling agent having the structure 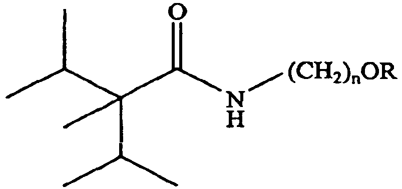 wherein R is C₁-C₆ alkyl, and n is 1, 2, or 3; a high-intensity sweetener; and a second cooling agent having a water solubility at 25°C differing from the water solubility of the first cooling agent by at least a factor of 2, which is defined below.

Another embodiment is a confectionery, comprising: a first cooling agent having the structure 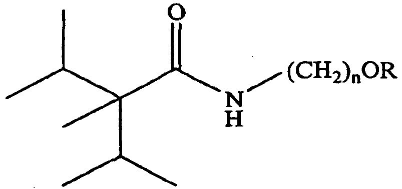 wherein R is C₁-C₆ alkyl, and n is 2 or 3; wherein the first cooling agent has a water solubility at 25°C of about 0.05 to about 10 grams per liter; and a second cooling agent having a water solubility at 25°C differing from the water solubility of the first cooling agent by at least a factor of 2, which is defined below.

Another embodiment is a beverage, comprising: a first cooling agent having the structure 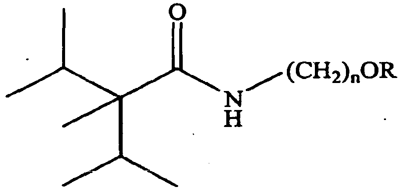 wherein R is C₁-C₆ alkyl, and n is 2 or 3; wherein the first cooling agent has a water solubility at 25°C of about 0.05 to about 10 grams per liter; and a second cooling agent having a water solubility at 25°C differing from the water solubility of the first cooling agent by at least a factor of 2, which is defined below.

These and other embodiments are described in detail below.

### DETAILED DESCRIPTION OF THE INVENTION

The present inventor has found that particular cooling agents are effective to partially or fully replace menthol in confectioneries and beverages. The particular cooling agents, the chemical structures of which are described below, may be used alone or in combination with menthol or other non-menthol cooling agents or both.

As used herein, the term "confectionery" includes, but is not limited to, chewing gum (which includes bubble gum), chocolate, lozenges, mints, tablets, chewy candies, hard candies, boiled candies, breath and other oral care films or strips, candy canes, lollipops, gummies, jellies, fudge, caramel, hard and soft panned goods, toffee, taffy, gelatin candies, gum drops, jelly beans, nougats, fondants, or combinations of one or more of these, or edible compositions incorporating one or more of these.

The term "beverage" as used herein means any drinkable liquid or semi-liquid, including for example flavored water, soft drinks, fruit drinks, coffee-based drinks, tea-based drinks, juice-based drinks, milk-based drinks, gel drinks, carbonated or non-carbonated drinks, alcoholic or non-alcoholic drinks.

One embodiment is a chewing gum comprising a cooling agent having the structure 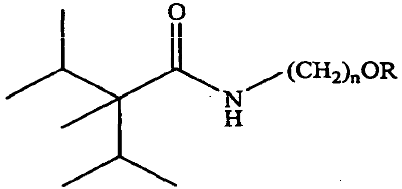 wherein R is C₁-C₆ alkyl, and n is 2 or 3. When R is C₁-C₆ alkyl, it may be, for example, methyl, ethyl, 1-propyl (n-propyl), 1-methylethyl (isopropyl), cyclopropyl, 1-butyl (n-butyl), 2-butyl, 2-methyl-1-propyl (sec-butyl), 1,1-dimethylethyl (tert-butyl), cyclobutyl, 1-methylcyclopropyl, 2-methylcyclopropyl, 1-pentyl (n-pentyl), 2-penyl, 3-pentyl, 2-methyl-1-butyl, 3-methyl-1-butyl, 2-methyl-2-butyl, 3-methyl-2-butyl, 2,2-dimethyl-1-propyl (neopentyl), cyclopentyl, 1-methylcyclobutyl, 2-methylcyclobutyl, 3-methylcyclobutyl, 1,2-dimethylcyclopropyl, 2,2-dimethylcyclopropyl, 2,3-dimethylcyclopropyl, 1-hexyl, 2-hexyl, 3-hexyl, 2-methyl-1-pentyl, 3-methyl-1-pentyl, 4-methyl-1-pentyl, 2-methyl-2-pentyl, 4-methyl-2-pentyl, 2-methyl-3-pentyl, 3-methyl-2-pentyl, 3-methyl-3-pentyl, 2,2-dimethyl-1-butyl, 3,3-dimethyl-1-butyl, 3,3-dimethyl-2-butyl, 2,3-dimethyl-1-butyl, 2,3-dimethyl-2-butyl, 1,2,2-trimethylcyclopropyl, 2,2,3-trimethylcyclopropyl, (1,2-dimethylcyclopropyl)methyl, (2,2-dimethylcyclopropyl)methyl, 1,2,3-trimethylcyclopropyl, (2,3-dimethylcyclopropyl)methyl, 2,2-dimethylcyclobutyl, 2,2-dimethylcyclobutyl, (1-methylcyclobutyl)methyl, 1,2-dimethylcyclobutyl, 2,3-dimethylcyclobutyl, (2-methylcyclobutyl)methyl, 1,3-dimethylcyclobutyl, 2,4-dimethylcyclobutyl, (3-methylcyclobutyl)methyl, 1-methylcyclopentyl, 2-methylcyclopentyl, cyclopentylmethyl, cyclohexyl, and the like. Methods of preparing cooling agents of this type are described, for example, in U.S. Patent No. 7,030,273 to Sun. Some of the cooling agents are commercially available from Qaroma, Inc., Baytown, Texas, U.S.A.

In some embodiments, the cooling agent is selected from N-(2-hydroxyethyl)-2-isopropyl-2,3-dimethylbutanamide, N-(3-ethoxypropyl)-2-isopropyl-2,3-dimethylbutanamide, N-(3-propoxypropyl)-2-isopropyl-2,3-dimethylbutanamide, N-(3-butoxypropyl)-2-isopropyl-2,3-dimethylbutanamide, and the like, and combinations thereof. In some embodiments, the cooling agent is N-(2-hydroxyethyl)-2-isopropyl-2,3-dimethylbutanamide, N-(3-ethoxypropyl)-2-isopropyl-2,3-dimethylbutanamide, or a combination thereof.

The chewing gum may comprise the cooling agent in an amount effective to impart a cooling sensation when the gum is chewed. Selecting a cooling agent amount will depend on factors including the chemical structure of the cooling agent(s) employed, whether or not the cooling agents are treated in any way to delay or accelerate their release from the chewing gum, and the desired level of cooling sensation to be imparted. Typical cooling agent amounts may be, for example, about 0.001 to about 15 weight percent of the chewing gum, specifically about 0.005 to about 10 weight percent, more specifically about 0.01 to about 5 weight percent, more specifically about 0.05 to about 3 weight percent, still more specifically about 0.05 to about 2 weight percent, even more specifically about 0.05 to about 1 weight percent, based on the total weight of the chewing gum. The second cooling agent is selected from the group consisting of menthol, N-ethyl-p-menthane-3-carboxamide (WS-3), the ethyl ester of N-[[5-methyl-2-(1-methylethyl)cyclohexyl]carbonyl]glycine, N-ethyl-2,2-diisopropylbutanamide, N-(1,1-dimethyl-2-hydroxyethyl)-2,2-diethylbutanamide, and combinations thereof.

The first cooling agent and the second cooling agent differ in their water solubilities. The chewing gum comprises a first cooling agent having a water solubility at 25°C of about 0.05 to about 10 grams per liter, and a second cooling agent having a water solubility differing from the water solubility of the first cooling agent by at least a factor of 2, more specifically at least a factor of 3, even more specifically at least a factor of 4. For example, when the first cooling agent is N,2,3-trimethyl-2-isopropylbutanamide and has a water solubility of 2.2 g/L, and the second cooling agent is N-ethyl-2,2-diisopropylbutanamide and has a water solubility of 0.4 g/L, the water solubility of the second cooling agent differs from the water solubility of the first cooling agent by a factor of 5.5 (2.2/0.4). The water solubility of the first cooling agent may be at least about 0.07 grams per liter. The water solubility of the first cooling agent may be up to about 9 grams per liter, or up to about 8 grams per liter. As used herein, the term "water solubility" refers to the 25°C water solubility, expressed in grams per liter of water. Water solubility may be determined empirically or estimated by various theoretical techniques. See, for example, Joseph R. Votano, Marc Parham, Lowell H. Hall, Lemont B. Kier, and L. Mark Hall, "Prediction of Aqueous Solubility Based on Large Datasets Using Several QSPR Models Utilizing Topological Structure Representation", Chemistry & Biodiversity, 2004, volume 1, issue 11, pages 1829-1841. Unless otherwise specified, the solubilities are for water at a pH of 7. Water solubility values, expressed in grams per liter (g/L), for a variety of cooling agents are listed in Table 1. These values were calculated using the logW tool available at www.logP.com as obtained from ChemSilico, Tewksbury, Massachusetts, U.S.A.

**Table 1**

| Cooling Agent | W (g/L) |
|---|---|
| N-(2-Hydroxyethyl)-2-isopropyl-2,3-dimethylbutanamide | 7.52 |
| N-(3-Ethoxypropyl)-2-isopropyl-2,3-dimethylbutanamide | 0.23 |
| N-(3-Propoxypropyl)-2-isopropyl-2,3-dimethylbutanamide | 0.12 |
| N-(3-Butoxypropyl)-2-isopropyl-2,3-dimethylbutanamide | 0.07 |
| Menthol | 0.45 |
| N-Ethyl-p-menthane-3-carboxamide (WS-3) | 0.47 |
| N-Ethyl-2,2-diisopropylbutanamide | 0.4 |
| N-(1,1-Dimethyl-2-hydroxyethyl)-2,2-diethylbutanamide | 4.16 |
| Monomenthyl glutarate | 0.22 |

Release of cooling agent from the gum during chewing may be modified to either accelerate or delay release. Techniques for modifying the release of cooling agents include, for example, encapsulation by spray drying, fluid-bed coating, spray chilling, or coacervation to give full or partial encapsulation; agglomeration to give partial encapsulation; fixation or absorption to give partial encapsulation; entrapment by extrusion; and adsorption onto silica or a zeolite.

In some embodiments, release of cooling agent is modified by incorporating cooling agent into a delivery system that also includes an encapsulating material. As used herein, the term "delivery system" includes an encapsulating material and at least one ingredient encapsulated with the encapsulating material. In some embodiments, a delivery system may include multiple ingredients, multiple layers or levels of encapsulation, and/or one or more other cooling agents. In some embodiments, the one or more ingredients and an encapsulating material in the delivery system may form a matrix. In some embodiments, the encapsulating material may completely coat or cover the one or more ingredients or form a partial or complete shell, cover, or coating around the ingredients.

In one aspect of the present invention, the release profile of the cooling agent can be managed by formulating the delivery system based on the hydrophobicity of the encapsulating material, for example a polymer. Using highly hydrophobic polymers to form a delivery system, the release of the cooling agent from the chewing gum can be delayed. In a similar manner, using encapsulating material that is less hydrophobic, the cooling agent can be released earlier or more rapidly.

Hydrophobicity can be quantified as water absorption measured according to the standard method designated ASTM D570-98 and available from ASTM International. Thus, by selecting encapsulating material with relatively lower water-absorption properties, the release of the cooling agent contained in the produced delivery system can be delayed compared to those encapsulating materials having higher water-absorption properties. In certain embodiments, a delivery system with encapsulation material having a water absorption of about 50 to 100 percent (as measured according to ASTM D570-98 at 25°C) can be used. To decrease the relative delivery rate of cooling agent or delay release of the cooling agent, the encapsulating material can be selected such that the water absorption would be from about 5 to about 50% (as measured according to ASTM D570-98 at 25°C). Within this range, the water absorption may be at least 10%, or at least 15%. Still further, in other embodiments, the water absorption properties of the encapsulating material can be selected to be from 0.0 to about 5% (as measured according to ASTM D570-98 at 25°C) to create even more delay in the release of the cooling agent. In some embodiments, the chewing gum comprises a first cooling agent encapsulated by a first encapsulating material and a second cooling agent encapsulated by a second encapsulating material. The first encapsulating material and the second encapsulating material can be the same or different. In some embodiments, the first encapsulating has a first water absorption, and the second encapsulating material has a second water absorption, wherein the first water absorption and the second water absorption differ by at least 10 percent, more specifically at least 20 percent, still more specifically at least 30 percent, even more specifically at least 40 percent, yet more specifically at least 50 percent, wherein all water absorptions are measured according to ASTM D570-98. The difference in water absorption may be such that the first water absorption is greater than the second water absorption, or vice versa.

In other embodiments, mixtures of two or more delivery systems formulated with encapsulating material having different water-absorption properties can also be used. When combining two or more delivery systems, the release of the cooling agent can be managed such that, for example, some of the cooling agent is released at an earlier stage of gum chewing and some of the cooling agent is released at a later stage of gum chewing.

Polymers with suitable hydrophobicity that may be used in the context of the present invention include homopolymers and copolymers of monomers including, for example, vinyl acetate, vinyl alcohol, ethylene, acrylic acid, methyl acrylate, ethyl acrylate, methacrylic acid, methyl methacrylate, ethyl methacrylate, and the like. Suitable hydrophobic copolymers include, for example, vinyl acetate/vinyl alcohol copolymers, ethylene/vinyl alcohol copolymers, ethylene/vinyl acetate copolymers, ethylene/vinyl alcohol/vinyl acetate terpolymers, ethylene/acrylic acid copolymers, ethylene/methyl methacrylate copolymers, and ethylene/methacrylic acid copolymers. For example, if poly(ethylene-*co*-vinyl acetate) is the encapsulating material, the degree of hydrophobicity can be controlled by adjusting the ratio of ethylene and vinyl acetate in the copolymer. Higher ethylene to vinyl acetate ratios provide slower release of the cooling agent. Using poly(ethylene-co-vinyl acetate) as an example, the weight percent of vinyl acetate in some embodiments of the copolymer can be about 1 to about 60 weight percent.

In some embodiments, the encapsulating material may be present in an amount of about 0.2 to about 10 percent by weight, specifically about 0.5 to about 8 weight percent, more specifically about 1 to about 5 weight percent, based on the total weight of the chewing gum. The amount of the encapsulating material with respect to the weight of the delivery system may be about 30 to about 99 weight percent, specifically about 45 to about 95 weight percent, more specifically about 60 to about 90 weight percent.

In formulating the delivery system based on the selection criteria of hydrophobicity of the encapsulating material, the cooling agent can be entirely encapsulated within the encapsulating material or incompletely encapsulated within the encapsulating material. The incomplete encapsulation can be accomplished by modifying and/or adjusting the manufacturing process to get partial coverage of the cooling agent. In some embodiments, the encapsulation material may form a matrix with the cooling agent.

The method of selecting at least one delivery system suitable for incorporation into an edible composition can begin by determining a desired release profile for the cooling agent. An actual release rate for a particular delivery system in a particular chewing gum may be determined by in vitro or in vivo testing. For example, so-called "chew out" tests may be conducted using human test subjects or an automated apparatus that simulates human chewing and salivation.

In one embodiment, the chewing gum comprises two cooling agents, wherein the first cooling agent is encapsulated by an encapsulating material having a water absorption of about 5 to about 50%, and wherein the second cooling agent is encapsulated by an encapsulating material having a water absorption of about 50 to 100%, wherein water absorption is measured at 25°C according to ASTM D570-98.

In addition to the cooling agent, the chewing gum may, optionally, further comprise a taste potentiator. Taste potentiators are substances capable of reducing or eliminating undesirable tastes in edible substances. Taste potentiators may also serve to enhance desirable tastes in edible substances such as sweetness potentiators that increase sweetness intensity. In the context of cooling agents, taste potentiators may be effective to reduce or eliminate bitterness, undesired mintiness, or other undesired taste. The taste potentiator compositions may have controlled-release properties. The taste potentiator may work synergistically with the cooling agent to enhance the perception of the cooling agent. In some embodiments, delivery of a sweetener in combination with a taste potentiator may enhance the sweet taste upon consumption of the composition. The incorporation of the potentiator, therefore, may allow for reduced amounts of cooling agent and/or sweetener without compromising the levels of cooling and sweetness provided by the composition.

Any of a variety of substances that function as taste potentiators may be employed in the compositions described herein. For instance, suitable taste potentiators include water-soluble taste potentiators, such as, but not limited to, neohesperidin dihydrochalcone, chlorogenic acid, alapyridaine, cynarin, miraculin, glupyridaine, pyridinium-betain compounds, glutamates, such as monosodium glutamate and monopotassium glutamate, neotame, thaumatin, tagatose, trehalose, salts, such as sodium chloride, monoammonium glycyrrhizinate, vanilla extract (in ethyl alcohol), water-soluble sugar acids, potassium chloride, sodium acid sulfate, water-soluble hydrolyzed vegetable proteins, water-soluble hydrolyzed animal proteins, water-soluble yeast extracts, adenosine monophosphate (AMP), glutathione, water-soluble nucleotides, such as inosine monophosphate, disodium inosinate, xanthosine monophosphate, guanylate monophosphate, alapyridaine (N-(1-carboxyethyl)-6-(hydroxymethyl)pyridinium-3-ol inner salt, sugar beet extract (alcoholic extract), sugarcane leaf essence (alcoholic extract), curculin, strogin, mabinlin, gymnemic acid, 2-hydroxybenzoic acid (2-HB), 3-hydroxybenzoic acid (3-HB), 4-hydroxybenzoic acid (4-HB), 2,3-dihydroxybenzoic acid (2,3-DHB), 2,4-dihydroxybenzoic acid (2,4-DHB), 2,5-dihydroxybenzoic acid (2,5-DHB), 2,6-dihydroxybenzoic acid (2,6-DHB), 3,4-dihydroxybenzoic acid (3,4-DHB), 3,5-dihydroxybenzoic acid (3,5-DHB), 2,3,4-trihydroxybenzoic acid (2,3,4-THB), 2,4,6-trihydroxybenzoic acid (2,4,6-THB), 3,4,5-trihydroxybenzoic acid (3,4,5-THB), 4-hydroxyphenylacetic acid, 2-hydroxyisocaproic acid, 3-hydroxycinnamic acid, 3-aminobenzoic acid, 4-aminobenzoic acid, 4-methoxysalicylic acid and combinations thereof.

Other suitable taste potentiators are substantially or completely insoluble in water, such as, but not limited to, citrus aurantium, vanilla oleoresin, water insoluble sugar acids, water insoluble hydrolyzed vegetable proteins, water insoluble hydrolyzed animal proteins, water insoluble yeast extracts, insoluble nucleotides, sugarcane leaf essence and combinations thereof.

Some other suitable taste potentiators include substances that are slightly soluble in water, such as, but not limited to, maltol, ethyl maltol, vanillin, slightly water-soluble sugar acids, slightly water-soluble hydrolyzed vegetable proteins, slightly water-soluble hydrolyzed animal proteins, slightly water-soluble yeast extracts, slightly water-soluble nucleotides and combinations thereof.

As mentioned above, sweetener potentiators, which are a type of taste potentiator, enhance the taste of sweetness. Exemplary sweetener potentiators include, but are not limited to, monoammonium glycyrrhizinate, licorice glycyrrhizinates, citrus aurantium, alapyridaine, alapyridaine (N-(1-carboxyethyl)-6-(hydroxymethyl)pyridinium-3-ol) inner salt, miraculin, curculin, strogin, mabinlin, gymnemic acid, cynarin, glupyridaine, pyridinium-betain compounds, sugar beet extract, neotame, thaumatin, neohesperidin dihydrochalcone, tagatose, trehalose, maltol, ethyl maltol, vanilla extract, vanilla oleoresin, vanillin, sugar beet extract (alcoholic extract), sugarcane leaf essence (alcoholic extract), compounds that respond to G-protein coupled receptors (T2Rs and T1Rs, 2-hydroxybenzoic acid (2-HB), 3-hydroxybenzoic acid (3-HB), 4-hydroxybenzoic acid (4-HB), 2,3-dihydroxybenzoic acid (2,3-DHB), 2,4-dihydroxybenzoic acid (2,4-DHB), 2,5-dihydroxybenzoic acid (2,5-DHB), 2,6-dihydroxybenzoic acid (2,6-DHB), 3,4-dihydroxybenzoic acid (3,4-DHB), 3,5-dihydroxybenzoic acid (3,5-DHB), 2,3,4-trihydroxybenzoic acid (2,3,4-THB), 2,4,6-trihydroxybenzoic acid (2,4,6-THB), 3,4,5-trihydroxybenzoic acid (3,4,5-THB), 4-hydroxyphenylacetic acid, 2-hydroxyisocaproic acid, 3-hydroxycinnamic acid, 3-aminobenzoic acid, 4-aminobenzoic acid, 4-methoxysalicylic acid and combinations thereof.

Additional taste potentiators for the enhancement of salt taste include acidic peptides, such as those disclosed in U.S. Patent No. 6,974,597 to Ohta et al. Acidic peptides include peptides having a larger number of acidic amino acids, such as aspartic acid and glutamic acid, than basic amino acids, such as lysine, arginine and histidine. The acidic peptides are obtained by peptide synthesis or by subjecting proteins to hydrolysis using endopeptidase, and if necessary, to deamidation. Suitable proteins for use in the production of the acidic peptides or the peptides obtained by subjecting a protein to hydrolysis and deamidation include plant proteins, (e.g. wheat gluten, corn proteins such as zein and gluten meal, and soybean protein isolate), animal proteins (e.g., milk proteins such as milk casein and milk whey protein, muscle proteins such as meat protein and fish meat protein, egg white protein and collagen), and microbial proteins (e.g., microbial cell protein and polypeptides produced by microorganisms).

The sensation of warming or cooling effects may also be prolonged with the use of a hydrophobic sweetener as described in U.S. Patent Publication No. 2003/0072842 A1. For example, such hydrophobic sweeteners include those of the formulae I-XI as set forth below: 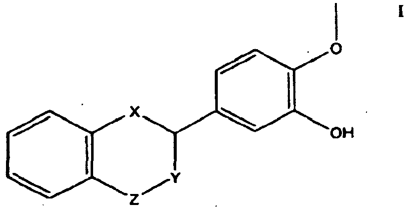 wherein X, Y and Z are selected from the group consisting of CH₂, O and S; 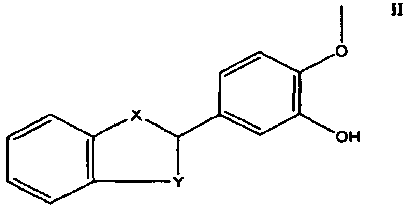 wherein X and Y are selected from the group consisting of S and O; 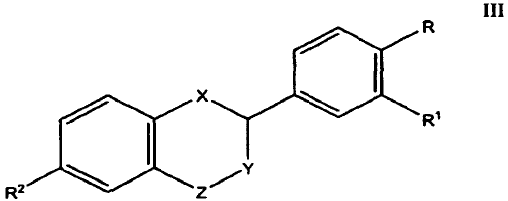 wherein X is S or O; Y is O or CH₂; Z is CH₂, SO₂ or S; R is OCH₃, OH or H; R¹ is SH or OH and R² is H or OH; 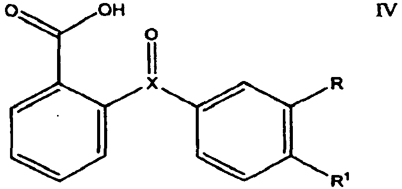 wherein X is C or S; R is OH or H and R¹ is OCH₃ or OH; 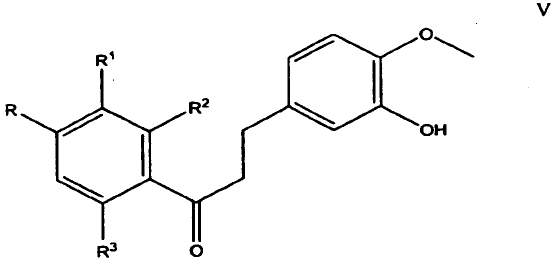 wherein R, R² and R³ are OH or H and R¹ is H or COOH; 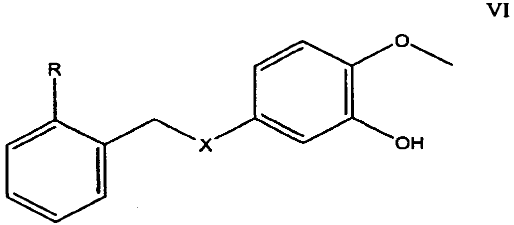 wherein X is O or CH₂ and R is COOH or H; 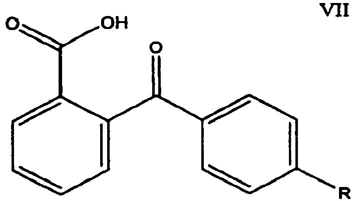 wherein R is CH₃CH₂, OH, N (CH₃)₂ or Cl; 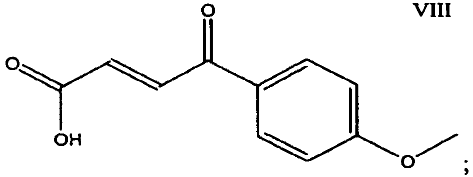 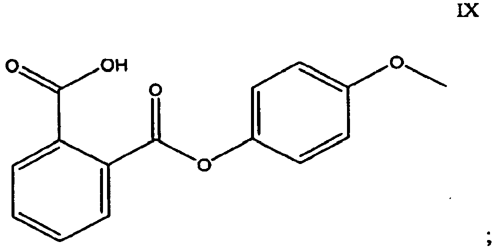 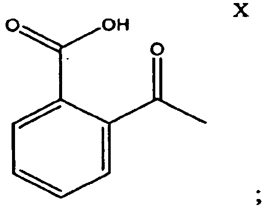 and

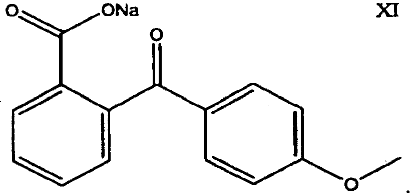

Perillartine also may be added as described in U.S. Patent No. 6,159,509 to Johnson et al.

Any of the above-listed taste potentiators may be used alone or in combination.

Some embodiments, for instance, may include two or more taste potentiators that act synergistically with one another. For instance, in some embodiments, a sweetener potentiator composition may be provided, which includes two or more sweetener potentiators that act synergistically with one another. The sweetener potentiator composition may enhance the sweetness of products into which it is incorporated by reducing the amount of sucrose needed to provide a sweetness intensity equivalent to sucrose. The sweetness enhancing effect of the combination of sweetener potentiators may be greater than the effect of either compound used individually.

Additional taste potentiators include those described, for example, in U.S. Patent Nos. 5,631,038 and 6,008,250 to Kurtz et al. In some embodiments, the taste potentiator may comprise 3-hydroxybenzoic acid and a dihydroxybenzoic acid selected from the group consisting of 2,4-dihydroxybenzoic acid, 3,4-dihydroxybenzoic acid, and combinations thereof. Comestible salts, such as sodium, potassium salts, calcium, magnesium, and ammonium salts, may be substituted for the free acids in these potentiator combinations.

The chewing gum may further comprise one or more of the sweetening agents discussed below in the context of beverage compositions. For example, the chewing gum may, optionally, comprise a high-intensity sweetener such as the potassium salt of 3,4-dihydro-6-methyl-1,2,3-oxathiazine-4-one-2,2-dioxide, L-aspartyl-L-phenylalanine methyl ester, L-alpha-aspartyl-N-(2,2,4,4-tetramethyl-3-thietanyl)-D-alaninamide hydrate, N-[N-(3,3-dimethylbutyl)-L-aspartyl]-L-phenylalanine 1-methyl ester, chlorinated derivatives of sucrose, thaumatin, monatin, mogrosides, or a combination thereof.

In some embodiments, the chewing gum comprises a taste potentiator and a high-intensity sweetener.

In addition to a suitable cooling composition, a chewing gum composition generally comprises a gum base and various additives. Generally, the chewing gum composition comprises a water insoluble elastomer portion and a water soluble bulk portion. The gum base can vary greatly depending upon various factors such as the consistency of gum desired, and the other components used in the composition to make the final chewing gum product. In some embodiments, the elastomer is pre-blended with ingredients such as elastomer solvents, plasticizers, fillers, etc. and formed into a gum base prior to mixing with the water soluble bulk portion to form the final chewing gum. In some embodiments, the final chewing gum does not include a pre-blended gum base.

The gum base may be any water-insoluble elastomer known in the chewing gum art, and includes those elastomers utilized for chewing gums and bubble gums. Illustrative examples of suitable polymers in gum bases include both natural and synthetic elastomers and rubbers, for example, substances of vegetable origin such as chicle, crown gum, nispero, rosadinha, jelutong, perillo, niger gutta, tunu, balata, gutta-percha, lechi-capsi, sorva, gutta kay, and the like. Synthetic elastomers such as butadiene-styrene copolymers, polyisobutylene, isobutylene-isoprene copolymers, polyethylene, and a combination thereof are also useful. The gum base may include a non-toxic vinyl polymer, such as polyvinyl acetate and its partial hydrolysate, poly(vinyl acetate-co-vinyl alcohol), or a combination comprising at least one of the foregoing. When utilized, the molecular weight of the vinyl polymer may range from about 3,000 to about 94,000 atomic mass units.

The amount of gum base employed will vary greatly depending upon various factors such as the type of base used, the consistency of the gum desired, and the other components used in the composition to make the final chewing gum product. In general, the gum base will be present in amounts of about 5 to about 94 weight percent of the final chewing gum composition, or in amounts of about 15 to about 45 weight percent, and more specifically in amounts of about 15 to about 35 weight percent, and even more specifically about 20 to about 30 weight percent of the chewing gum product.

The gum base composition may contain conventional elastomer solvents to aid in softening the elastomer component, for example trepanned resins such as polymers of alpha-pinene or beta-pinene, methyl, glycerol or pentaerythritol esters of rosins or modified rosins and gums, such as hydrogenated, dimerized or polymerized rosins, or combinations comprising at least one of the foregoing resins, the pentaerythritol ester of partially hydrogenated wood or gum rosin, the pentaerythritol ester of wood or gum rosin, the glycerol ester of wood rosin, the glycerol ester of partially dimerized wood or gum rosin, the glycerol ester of polymerized wood or gum rosin, the glycerol ester of tall oil rosin, the glycerol ester of wood or gum rosin, the partially hydrogenated wood or gum rosin, the partially hydrogenated methyl ester of wood or gum rosin, and the like. The elastomer solvent can be used in amounts of about 5 weight percent to about 75 weight percent, of the gum base, and specifically about 45 weight percent to about 70 weight percent of the gum base.

In addition to a water insoluble gum base portion, a typical chewing gum composition includes a water soluble bulk portion and various additives. The water soluble portion may include sweetening agents, bulking agents, softening agents and/or plasticizers, waxes, emulsifiers, thickening agents, flavor enhancing agents, warming agents, breath fresheners, mouth moisteners, acidulants, coloring agents, buffering agents, antioxidants, nutraceuticals, medicaments and other conventional chewing gum additives that provide desired attributes. Other conventional chewing gum additives known to one having ordinary skill in the art may also be used in the water soluble bulk portion.

Suitable bulking agents may include mineral adjuvants, which may serve as fillers and textural agents. Suitable mineral adjuvants include calcium carbonate, magnesium carbonate, alumina, aluminum hydroxide, aluminum silicate, talc, tricalcium phosphate, tricalcium phosphate and the like, which can serve as fillers and textural agents. These fillers or adjuvants can be used in the gum base in various amounts. Specifically the amount of filler, when used, will be present in an amount of greater than about 0 to about 60 weight percent of the total gum base, and more specifically from about 20 to about 30 weight percent of the total gum base.

Additional bulking agents (carriers, extenders) suitable for use include sweetening agents such as monosaccharides, disaccharides, polysaccharides, sugar alcohols, polydextrose, and maltodextrins; minerals, such as calcium carbonate, talc, titanium dioxide, dicalcium phosphate; and combinations thereof. Bulking agents may be used in amounts up to about 90 weight percent of the total gum composition, specifically about 40 to about 70 weight percent, more specifically about 50 to about 65 weight percent of the total gum composition.

Fillers modify the texture of the gum base and aid processing. Examples of such fillers include magnesium and aluminum silicates, clay, alumina, talc, titanium oxide, cellulose polymers, and the like. Fillers are typically present in an amount of about 1 to about 60 weight percent, based on the total weight of the gum composition.

Softeners and plasticizers may be used to provide a variety of desirable textures and consistency properties. Suitable plasticizers and softeners may include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and a combination comprising at least one of the foregoing. Because of the low molecular weights of these softeners and plasticizers, they are able to penetrate the fundamental structure of the gum base, making it plastic and less viscous.

Waxes may be used in the gum base to soften the elastomer, improve the elasticity of the gum base, and obtain a variety of desirable textures and consistency properties. Suitable waxes may include natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, and propylene glycol. These additives are generally used in amounts of up to about 30 weight percent, specifically about 3 weight percent to about 20 weight percent of the gum base. Low melting waxes may be used in the gum compositions. These waxes typically have a melting point below about 60°C, and specifically about 45 to about 55° C. High melting waxes may also be used in the gum base. Such high melting waxes include beeswax, vegetable wax, candelilla wax, carnauba wax, most petroleum waxes, and the like, and combinations thereof.

Suitable emulsifiers include distilled monoglycerides, acetic acid esters of mono and diglycerides, citric acid esters of mono and diglycerides, lactic acid esters of mono and diglycerides, mono and diglycerides, polyglycerol esters of fatty acids, ceteareth-20, polyglycerol polyricinoleate, propylene glycol esters of fatty acids, polyglyceryl laurate, glyceryl cocoate, gum arabic, acacia gum, sorbitan monostearates, sorbitan tristearates, sorbitan monolaurate, sorbitan monooleate, sodium stearoyl lactylates, calcium stearoyl lactylates, diacetyl tartaric acid esters of mono- and diglycerides, glyceryl tricaprylate-caprate / medium chain triglycerides, glyceryl dioleate, glyceryl oleate, glyceryl lacto esters of fatty acids, glyceryl lacto palmitate, glyceryl stearate, glyceryl laurate, glycerlyl dilaurate, glyceryl monoricinoleate, triglyceryl monostearate, hexaglyceryl distearate, decaglyceryl monostearate, decaglyceryl dipalmitate, decaglyceryl monooleate, polyglyceryl 10 hexaoleate, medium chain triglycerides, caprylic/capric triglyceride, propylene glycol monostearate, polysorbate 20, polysorbate 40, polysorbate 60, polysorbate 80, polysorbate 65, hexylglyceryl distearate, triglyceryl monostearate, tweens, spans, stearoyl lactylates, calcium stearoyl-2-lactylate, sodium stearoyl-2-lactylate lecithin, ammonium phosphatide, sucrose esters of fatty acids, sucroglycerides, propane-1,2-diol esters of fatty acids, and combinations comprising at least one of the foregoing.

Suitable thickening agents include cellulose ethers (e.g., hydroxyethyl cellulose, hydroxypropylmethyl cellulose, or hydroxypropyl cellulose), methylcellulose, carboxymethylcellulose, and combinations thereof. Additional polymers useful as thickeners include carbomer, polyvinyl pyrrolidone, polyvinyl alcohol, sodium alginate, polyethylene glycol, natural gums like xanthan gum, tragacantha, guar gum, acacia gum, arabic gum, water-dispersible polyacrylates like polyacrylic acid, methyl methacrylate copolymer, and carboxyvinyl copolymers.

Suitable sweetening agents, flavor enhancing agents, warming agents, breath fresheners, mouth moisteners, coloring agents, acidulants, antioxidants, nutraceuticals, and medicaments include those that are suitable for use in the confectionery compositions.

The chewing gum composition may be coated or uncoated, and be in the form of slabs, sticks, pellets, cubes, trapezoids, rectangles, or balls. The compositions of the different forms of the gum compositions will be similar but may vary with regard to the ratios of the ingredients. For example, coated gum compositions may contain a lower percentage of softeners. Pellets, cubes, trapezoids, rectangles, and balls may have a chewing gum core, which has been coated with either a sugar solution or a sugarless solution to create a hard or soft shell. Slabs, sticks, and other uncoated shapes are usually formulated to be softer in texture than the chewing gum core. In some cases, a hydroxy fatty acid salt or other surfactant active may have a softening effect on the gum base. In order to adjust for any potential undesirable softening effect that the surfactant actives may have on the gum base, it may be beneficial to formulate a slab or stick gum having a firmer texture than usual (i.e., use less conventional softener than is typically used).

Center-filled gum is another common gum form. The gum portion has a similar composition to that described above. However, the center-fill is typically an aqueous liquid or gel, which is injected into the center of the gum during processing. The center-filled gum may also be optionally coated and may be prepared in various forms, such as in the form of a lollipop.

In one exemplary process, a gum base is heated to a temperature sufficiently high to soften the base without adversely effecting the physical and chemical make up of the base, which will vary depending upon the composition of the gum base used, and is readily determined by those skilled in the art without undue experimentation. For example, the gum base can be conventionally melted to about 60°C to about 160°C, or melted to about 150°C to about 175°C, for a period of time sufficient to render the base molten, e.g., about thirty minutes, just prior to being admixed incrementally with the remaining ingredients of the base such as plasticizers, bulking agents, sweeteners, the softener and coloring agents to plasticize the blend as well as to modulate the hardness, viscoelasticity and formability of the base, and the flavor enhancing composition (as a concentrate with other additives or separately). Mixing is continued until a uniform mixture of the gum composition is obtained. Thereafter the gum composition mixture may be formed into desirable gum shapes, i.e., stick, slab, pellet, ball, or the like.

In some embodiments, a method of preparing a stain-removing gum composition includes heating a gum base to soften the base and then mixing the softened gum base with a chelating agent, and a surfactant including a fatty acid salt and at least one other anionic or nonionic surfactant so as to obtain a substantially homogeneous mixture. The method further includes cooling the mixture and forming the cooled mixture into individual gum pieces. The fatty acid salt may be a hydroxy fatty acid salt. In some embodiments, the hydroxy fatty acid salt may be a salt of ricinoleic acid, such as sodium ricinoleate. Further ingredients may be mixed into the softened gum base. For example, one or more of the following may be added: abrasive, bulking agent, filler, humectant, flavorant, colorant, dispersing agent, softener, plasticizer, preservative, warming agent, tooth whitening agent, and sweetener.

In some embodiments, gum pieces may be coated with an aqueous coating composition, which may be applied by any method known in the art. The coating composition may be present in an amount from about 25 weight percent to about 35 weight percent, specifically about 30 weight percent of the gum composition.

The outer coating may be hard or crunchy. Typically, the outer coating can include sorbitol, maltitol, xylitol, isomalt, and other crystallizable polyols; sucrose can also be used. Appropriate flavor enhancing agents may also be added to yield unique product characteristics.

The coating, if present, may include several opaque layers, such that the chewing gum composition is not visible through the coating itself, which can optionally be covered with a further one or more transparent layers for aesthetic, textural and protective purposes. The outer coating may also contain small amounts of water and gum arabic. The coating can be further coated with wax. The coating may be applied in a conventional manner by successive applications of a coating solution, with drying in between each coat. As the coating dries it usually becomes opaque and is usually white, though other colorants may be added. A polyol coating can be further coated with wax. The coating can further include colored flakes or speckles.

If the composition comprises a coating, it is possible that a cooling composition can be dispersed throughout the coating. The coating may be formulated to assist with increasing the thermal stability of the gum piece and preventing leaking of a liquid fill if the gum product is a center-filled gum. In some embodiments, the coating may include a gelatin composition. The gelatin composition may be added as a 40 weight percent by weight solution and may be present in the coating composition from about 5 to about 10 weight percent by weight of the coating composition, and more specifically about 7 to about 8 weight percent. The gel strength of the gelatin may be from about 130 to about 250 bloom.

The cooling agents described herein may be used not only in chewing gums, but in other confectioneries, as well. Thus, one embodiment is a confectionery, comprising: a first cooling agent having the structure 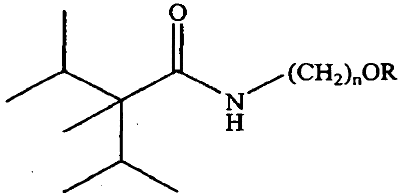 wherein R is C₁-C₆ alkyl, and n is 2 or 3; wherein the first cooling agent has a water solubility at 25°C of about 0.05 to about 10 grams per liter, specifically about 0.07 to about 9 grams per liter, more specifically about 0.07 to about 8 grams per liter; and a second cooling agent having a water solubility at 25°C differing from the water solubility of the first cooling agent by at least a factor of 2, specifically at least a factor of 3, more specifically at least a factor of 4.

In some embodiments, the first cooling agent may be selected from, for example, N-(2-hydroxyethyl)-2-isopropyl-2,3-dimethylbutanamide, N-(3-ethoxypropyl)-2-isopropyl-2,3-dimethylbutanamide, N-(3-propoxypropyl)-2-isopropyl-2,3-dimethylbutanamide, N-(3-butoxypropyl)-2-isopropyl-2,3-dimethylbutanamide, and combinations thereof. In some embodiments, the first cooling agent is N-(2-hydroxyethyl)-2-isopropyl-2,3-dimethylbutanamide, N-(3-ethoxypropyl)-2-isopropyl-2,3-dimethylbutanamide, or a combination thereof.

The second cooling agent is selected from menthol, N-ethyl-p-menthane-3-carboxamide, the ethyl ester of N-[[5-methyl-2-(1-methylethyl)cyclohexyl]carbonyl]glycine, N-ethyl-2,2-diisopropylbutanamide, N-(1,1-dimethyl-2-hydroxyethyl)-2,2-diethylbutanamide, and combinations thereof.

The confectionery may comprise the first and second cooling agents in amounts effective to impart a cooling sensation when the confectionery is consumed. Selecting cooling agent amounts will depend on factors including the chemical structures of the cooling agents employed, whether or not the cooling agents exhibit synergistic cooling effects, whether or not the cooling agents are treated in any way to delay or accelerate their release from the confectionery, and the desired level of cooling sensation to be imparted. Typically, the first and second cooling agent may each independently be used in an amount of about 0.001 to about 10 weight percent, specifically about 0.005 to about 5 weight percent, more specifically about 0.01 to about 3 weight percent, still more specifically about 0.05 to about 2 weight percent, even more specifically about 0.05 to about 1 weight percent, based on the total weight of the confectionery.

In some confectionery embodiments, the first cooling agent is encapsulated by a first encapsulating material and the second cooling agent is encapsulated by a second encapsulating agent. The first encapsulating agent and the second encapsulating agent can be the same or different. In some embodiments, the first encapsulating agent has a first water absorption, the second encapsulating material has a second water absorption, and the first water absorption and the second water absorption differ by at least 10 percent, specifically at least 20 percent, more specifically at least 20 percent, still more specifically at least 40 percent, yet more specifically at least 50 percent. All water absorptions are measured according to ASTM D570-98.

The confectionery may, optionally, further comprise one or more of the taste potentiators described above in the context of chewing gum compositions.

In addition to a cooling agent, a confectionery composition may contain other additives according to use. One or more conventional additives may be used with a confectionery composition, including sweeteners, bulking agents, flavor enhancing agents, warming agents, breath fresheners, mouth moisteners, coloring agents, acidulants, buffering agents, antioxidants, nutraceuticals, and medicaments. Some of these additives may serve more than one purpose. For example, a sweetener, e.g., sucrose, sorbitol or other sugar alcohol, or combinations of the foregoing sweeteners, may also function as a bulking agent. A combination comprising at least one of the foregoing additives is often used.

A sweetening agent may be used in the confectionery composition to provide a sweet taste to the confectionery. Sweetening agents may include sugar sweeteners (saccharide sweeteners), sugarless sweeteners, high-intensity sweeteners, or a combination of at least one of the foregoing sweetening agents.

Suitable saccharide sweeteners may include monosaccharides, disaccharides, and polysaccharides such as sucrose (sugar), dextrose, maltose, dextrin, xylose, ribose, glucose, mannose, galactose, fructose (levulose), lactose, invert sugar, fructooligosaccharide syrups, partially hydrolyzed starch, corn syrup solids, such as high fructose corn syrup, sorbitol, mannitol, maltitol, xylitol, erythritol, polysaccharide polyols, maltitol syrups, hydrogenated starch hydrolysates, polydextrose, and combinations thereof.

Suitable sugarless sweetening agents may include sugar alcohols (or polyols) such as sorbitol, xylitol, mannitol, galactitol, maltitol, hydrogenated isomaltulose (isomalt), lactitol, erythritol, hydrogenated starch hydrolysate, stevia and combinations thereof.

Suitable hydrogenated starch hydrolysates may include those disclosed in U.S. Patent Nos. 4,279,931 and 4,445,938 to Verwaerde et al., and various hydrogenated glucose syrups and/or powders that contain sorbitol, hydrogenated disaccharides, hydrogenated higher polysaccharides, or combinations thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN, a line of commercially available products manufactured by Roquette Freres of France, and HYSTAR, a line of commercially available products manufactured by Lonza, Inc., of Fairlawn, N.J., also may be useful.

A high-intensity sweetener as used herein means an agent having a sweetness at least 100 times, specifically at least 500 times, and more specifically at least 1,000 times, that of a sucrose sugar on a per weight basis. The high-intensity sweetener may be selected from a wide range of materials, including water-soluble sweeteners, water-soluble artificial sweeteners, water-soluble sweeteners derived from naturally occurring water-soluble sweeteners, dipeptide based sweeteners, and protein based sweeteners. Combinations comprising one or more sweeteners or one or more of the foregoing types of sweeteners may be used. In some embodiments, the high-intensity sweetener is selected from 3,4-dihydro-6-methyl-1,2,3-oxathiazine-4-one-2,2-dioxide, L-aspartyl-L-phenylalanine methyl ester, L-alpha-aspartyl-N-(2,2,4,4-tetramethyl-3-thietanyl)-D-alaninamide hydrate, N-[N-(3,3-dimethylbutyl)-L-aspartyl]-L-phenylalanine 1-methyl ester, chlorinated derivatives of sucrose, thaumatin, monatin, mogrosides, and combinations thereof. Additional suitable high-intensity sweeteners are described below in the context of beverage compositions.

In some embodiments, the confectionery comprises a taste potentiator and a high-intensity sweetener.

Bulking agents may include sweetening agents listed above and other suitable agents such as minerals. Specific examples may include monosaccharides, disaccharides, polysaccharides, sugar alcohols, polydextrose, and maltodextrins.

Flavor enhancing agents may include flavorants, the taste potentiators described above, and combinations thereof. Suitable flavorants include artificial or natural flavors known in the art, for example synthetic flavor oils, natural flavoring aromatics and/or oils, oleoresins, extracts derived from plants, leaves, flowers, fruits, and the like, and combinations comprising at least one of the foregoing flavorants. Nonlimiting representative flavors include oils such as spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, cassia oil, citrus oils including lemon, orange, lime, grapefruit, vanilla, fruit essences, including apple, pear, peach, grape, strawberry, raspberry, blackberry, cherry, plum, pineapple, apricot, banana, melon, tropical fruit, mango, mangosteen, pomegranate, papaya, and honey lemon essences, and the like, or a combination comprising at least one of the foregoing flavorants. Specific flavorants are mints such as peppermint, spearmint, artificial vanilla, cinnamon derivatives, and various fruit flavors.

Other types of flavorants may include various aldehydes and esters such as cinnamyl acetate, cinnamaldehyde, citral diethylacetal, dihydrocarvyl acetate, eugenyl formate, p-methylamisol, acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2-hexenal (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin). Flavorants can be used in liquid or solid form. When used in solid (dry) form, suitable drying means such as spray drying the oil may be used.

In some embodiments, the confectionery comprises a saccharide sweetener, a flavor enhancing agent, and a high-intensity sweetener.

Warming agents may include a wide variety of compounds known to provide the sensory signal of warming to the user. These compounds offer the perceived sensation of warmth, particularly in the oral cavity, and often enhance the perception of flavors, sweeteners and other organoleptic components. Suitable warming agents include vanillyl alcohol n-butylether (TK-1000) supplied by Takasago Perfumary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamyl ether, vanillyl alcohol n-hexyl ether, vanillyl alcohol methyl ether, vanillyl alcohol ethyl ether, gingerol, shogaol, paradol, zingerone, capsaicin, dihydrocapsaicin, nordihydrocapsaicin, homocapsaicin, homodihydrocapsaicin, ethanol, isopropyl alcohol, isoamyl alcohol, benzyl alcohol, glycerine, and a combination comprising at least one of the foregoing. In some embodiments, a warming agent and a cooling agent may be incorporated into spatially distinct regions of the confectionery.

Breath fresheners may include zinc citrate, zinc acetate, zinc fluoride, zinc ammonium sulfate, zinc bromide, zinc iodide, zinc chloride, zinc nitrate, zinc fluorosilicate, zinc gluconate, zinc tartarate, zinc succinate, zinc formate, zinc chromate, zinc phenol sulfonate, zinc dithionate, zinc sulfate, silver nitrate, zinc salicylate, zinc glycerophosphate, copper nitrate, chlorophyll, copper chlorophyll, chlorophyllin, hydrogenated cottonseed oil, chlorine dioxide, beta cyclodextrin, zeolite, silica-based material, carbon-based material, enzymes such as laccase, or a combination comprising at least one of the foregoing. Breath fresheners can include essential oils as well as various aldehydes and alcohols. Essential oils used as breath fresheners can include oils of spearmint, peppermint, wintergreen, sassafras, chlorophyll, citral, geraniol, cardamom, clove, sage, carvacrol, eucalyptus, cardamom, magnolia bark extract, marjoram, cinnamon, lemon, lime, grapefruit, orange, or a combination comprising at least one of the foregoing. Aldehydes such as cinnamic aldehyde and salicylaldehyde can be used. Additionally, chemicals such as carvone, iso-garrigol, and anethole can function as breath fresheners.

Suitable mouth moisteners may include saliva stimulators such as acids and salts including acetic acid, adipic acid, ascorbic acid, butyric acid, citric acid, formic acid, fumaric acid, glyconic acid, lactic acid, phosphoric acid, malic acid, oxalic acid, succinic acid, and tartaric acid. Mouth moisteners may also include hydrocolloid materials that hydrate and may adhere to oral surface to provide a sensation of mouth moistening. Hydrocolloid materials can include naturally occurring materials such as plant exudates, seed gums, and seaweed extracts or they can be chemically modified materials such as cellulose, starch, or natural gum derivatives. Furthermore, hydrocolloid materials can include pectin, gum arabic, acacia gum, alginates, agar, carageenans, guar gum, xanthan gum, locust bean gum, gelatin, gellan gum, galactomannans, tragacanth gum, karaya gum, curdlan, konjac, chitosan, xyloglucan, beta glucan, furcellaran, gum ghatti, tamarin, and bacterial gums. Mouth moisteners can include modified natural gums such as propylene glycol alginate, carboxymethyl locust bean gum, low methoxyl pectin, or a combination comprising at least one of the foregoing. Modified celluloses can be included such as microcrystalline cellulose, carboxymethylcellulose (CMC), methylcellulose (MC), hydroxypropylmethylcellulose (HPCM), hydroxypropylcellulose (HPC), or a combination comprising at least one of the foregoing mouth moisteners.

Coloring agents may be used to produce a desired color for the confectionery composition. Suitable coloring agents include pigments and natural food colors and dyes suitable for food, drug, and cosmetic applications. Suitable food colors include annatto extract (E160b), bixin, norbixin, astaxanthin, dehydrated beets (beet powder), beetroot red/betanin (E162), ultramarine blue, canthaxanthin (E161g), cryptoxanthin (E161c), rubixanthin (E161d), violanxanthin (E161e), rhodoxanthin (E161f), caramel (E150(a-d)), beta-apo-8-carotenal (E160e), carotene (E160a), alpha carotene, gamma carotene, ethyl ester of beta-apo-8-carotenal (E160f), flavoxanthin (E161a), lutein (E161b), cochineal extract (E120), carmine (E132), carmoisine/azorubine (E122), sodium copper chlorophyllin (E141), chlorophyll (E140), toasted partially defatted cooked cottonseed flour, ferrous gluconate, ferrous lactate, grape color extract, grape skin extract (enocianina), anthocyanins (E163), haematococcus algae meal, synthetic iron oxide, iron oxides and hydroxides (E172), fruit juice, vegetable juice, dried algae meal, tagetes (Aztec marigold) meal and extract, carrot oil, corn endosperm oil, paprika, paprika oleoresin, phaffia yeast, riboflavin (E101), saffron, titanium dioxide, turmeric (E100), turmeric oleoresin, amaranth (E123), capsanthin/capsorbin (E160c), lycopene (E160d), FD&C blue #1, FD&C blue #2, FD&C green #3, FD&C red #3, FD&C red #40, FD&C yellow #5 and FD&C yellow #6, tartrazine (E102), quinoline yellow (E104), sunset yellow (E110), ponceau (E124), erythrosine (E127), patent blue V (E131), titanium dioxide (E171), aluminum (E173), silver (E174), gold (E175), pigment rubine/lithol rubine BK (E180), calcium carbonate (E170), carbon black (E153), black PN/brilliant black BN (E151), green S/acid brilliant green BS (E142), or a combination comprising at least one of the foregoing. In some embodiments, certified colors can include FD&C aluminum lakes, or a combination comprising at least one of the foregoing colors.

Suitable acidulants may include acetic, citric, fumaric, hydrochloric, lactic, and nitric acids as well as sodium citrate, sodium bicarbonate and carbonate, sodium or potassium phosphate and magnesium oxide, potassium metaphosphate, sodium acetate, or a combination comprising at least one of the foregoing acidulants.

Exemplary buffering agents may include sodium bicarbonate, sodium phosphate, sodium hydroxide, ammonium hydroxide, potassium hydroxide, sodium stannate, triethanolamine, citric acid, hydrochloric acid, sodium citrate, or a combination comprising at least one of the foregoing buffering agents.

Antioxidants may include butylated hydroxytoluene (BHT), butylated hydroxyanisole (BHA), propyl gallate, and combinations thereof.

Suitable nutraceuticals may include herbs and botanicals such as aloe, bilberry, bloodroot, calendula, capsicum, chamomile, cat's claw, echinacea, garlic, ginger, ginkgo, goldenseal, various ginseng, green tea, guarana, kava kava, lutein, nettle, passionflower, rosemary, saw palmetto, St. John's wort, thyme, and valerian. Also included are mineral supplements such as calcium, copper, iodine, iron, magnesium, manganese, molybdenum, phosphorous, zinc, and selenium. Other nutraceuticals may include fructooligosaccharides, glucosamine, grapeseed extract, cola extract, guarana, ephedra, inulin, phytosterols, phytochemicals, catechins, epicatechin, epicatechin gallate, epigallocatechin, epigallocatechin gallate, isoflavones, lecithin, lycopene, oligofructose, polyphenols, flavanoids, flavanols, flavonols, and psyllium as well as weight loss agents such as chromium picolinate and phenylpropanolamine. Exemplary vitamins and co-enzymes include water or fat soluble vitamins such as thiamin, riboflavin, nicotinic acid, pyridoxine, pantothenic acid, biotin, folic acid, flavin, choline, inositol and para-aminobenzoic acid, carnitine, vitamin C, vitamin D and its analogs, vitamin A and the carotenoids, retinoic acid, vitamin E, vitamin K, vitamin B₆, and vitamin B₁₂. Combinations comprising at least one of the foregoing nutraceuticals may be used.

Moreover, the relative amount of each of the above additives of the confectionery composition will depend on the particular composition and the additive, as well as the desired flavor, and are readily determined by one of ordinary skill in the art without undue experimentation.

Suitable medicaments may include oral care agents, throat care agents, allergy relief agents, and general medical care agents.

Suitable oral care agents may include breath fresheners, tooth whiteners, antimicrobial agents, tooth mineralizers, tooth decay inhibitors, topical anesthetics, mucoprotectants, stain removers, oral cleaning, bleaching agents, desensitizing agents, dental remineralization agents, antibacterial agents, anticaries agents, plaque acid buffering agents, surfactants and anticalculus agents, and a combination comprising at least one of the foregoing. Non-limiting examples of such ingredients may include hydrolytic agents such as proteolytic enzymes, abrasives such as hydrated silica, calcium carbonate, sodium bicarbonate and alumina, other active stain-removing components such as surface-active agents, including anionic surfactants such as sodium stearate, sodium palmitate, sulfated butyl oleate, sodium oleate, salts of fumaric acid, glycerol, hydroxylated lecithin, sodium lauryl sulfate and chelators such as polyphosphates, which are typically employed as tartar control ingredients. Oral care agents may also include tetrasodium pyrophosphate and sodium tri-polyphosphate, sodium bicarbonate, sodium acid pyrophosphate, sodium tripolyphosphate, xylitol, sodium hexametaphosphate, peroxides such as carbamide peroxide, calcium peroxide, magnesium peroxide, sodium peroxide, hydrogen peroxide, and peroxydiphospate.

In addition, oral care ingredients may also include antibacterial agents comprising triclosan, chlorhexidine, zinc citrate, silver nitrate, copper, limonene, and cetyl pyridinium chloride.

Anticaries agents can include fluoride ions, fluorine-providing components (e.g., inorganic fluoride salts), soluble alkali metal salts (e.g., sodium fluoride, potassium fluoride, sodium fluorosilicate, ammonium fluorosilicate, potassium fluoride, sodium monofluorophosphate), and tin fluorides, (e.g., stannous fluoride and stannous chloride, potassium stannous fluoride (SnF₂-KF), sodium hexafluorostannate, stannous chlorofluoride).

One embodiment is a confectionery, comprising: N-ethyl-2,2-diisopropylbutanamide; and a throat care agent or throat-soothing agent. Throat care or throat-soothing agents may include analgesics, antihistamines, anesthetics, demulcents, mucolytics, expectorants, antitussive, and antiseptics. In some embodiments, the throat care agent is honey, propolis, aloe vera, aloe ferox, glycerine, menthol, or a combination comprising at least one of the foregoing. The confectionery can further comprise N-(2-hydroxyethyl)-2-isopropyl-2,3-dimethylbutanamide, N-ethyl-2,2-diisopropylbutanamide, N-(1,1-dimethyl-2-hydroxyethyl)-2,2-diethylbutanamide, N-ethyl-p-menthane-3-carboxamide, N,2,3-trimethyl-2-isopropylbutanamide, or a combination thereof.

One embodiment is a confectionery, comprising: N-ethyl-2,2-diisopropylbutanamide; and an allergy relief agent. As used herein, the term "allergy relief agent" refers to substances that reduce or alleviate allergy symptoms. Such substances can include, but are not limited to, antihistamines (diphenhydramine, chlorpheniramine, brompheniramine, clemastine, and salts of the foregoing), decongestants (including pseudoephedrine, phenylephedrine, phenylpropanolamine, and salts of the foregoing), non-steroidal anti-inflammatory drugs ("NSAIDS"; including propionic acid derivatives, acidic acid derivatives, fenamic acid derivatives, biphenylcarboxylic acid derivatives, oxicams, and COX-2 inhibitors). Such substances can also include homeopathic medicines, nutrients, and herbal remedies that reduce or alleviate allergy symptoms. Such homeopathic medicines, nutrients and herbal ingredients can include, but are not limited to, butterbur (*Petasites hybridus*), nettles, goldenseal, quercetin, grape seed extract, biminne, Luffa Operculata, Galphimia Glauca, Histaminum Hydrochloricum, and Sulfur. In some embodiments, the allergy relief agent offers symptom relief through sensory attributes. For example, menthol can provide a sensation of nasal clearing, trans-pellitorin and jambu can provide a tingling sensation that simulates salivation and provide a sensation of mouth moistening. Similarly, food acids can stimulate salivation and provide a sensation of mouth moistening. Optionally the confectionery may further include an anti-tussive. Suitable antitussives include, for example, dextromethorphan, codeine and pholcodine. The confectionery can further comprise N-(2-hydroxyethyl)-2-isopropyl-2,3-dimethylbutanamide, N-ethyl-2,2-diisopropylbutanamide, N-(1,1-dimethyl-2-hydroxyethyl)-2,2-diethylbutanamide, N-ethyl-p-menthane-3-carboxamide, N,2,3-trimethyl-2-isopropylbutanamide, or a combination thereof.

The confectionery can comprise a general medical care agent. General medical care agents may include antihistamines, decongestants (sympathomimetics), antitussives (cough suppressants), anti-inflammatories, homeopathic agents, expectorants, anesthetics, demulcents, analgesics, anticholinergics, throat-soothing agents, antibacterial agents, antiviral agents, antifungal agents, antacids, antinauseants, chemotherapeutics, diuretics, psychotherapeutic agents, cardiovascular agents, various alkaloids, laxatives, appetite suppressants, ACE-inhibitors, anti-asthmatics, anti-cholesterolemics, antidepressants, anti-diarrhea preparations, anti-hypertensives, anti-lipid agents, acne drugs, amino acid preparations, anti-uricemic drugs, anabolic preparations, appetite stimulants, bone metabolism regulators, contraceptives, endometriosis management agents, enzymes, erectile dysfunction therapies such as sildenafil citrate, fertility agents, gastrointestinal agents, homeopathic remedies, hormones, motion sickness treatments, muscle relaxants, osteoporosis preparations, oxytocics, parasympatholytics, parasympathomimetics, prostaglandins, respiratory agents, sedatives, smoking cessation aids such as bromocryptine or nicotine, tremor preparations, urinary tract agents, anti-ulcer agents, anti-emetics, hyper- and hypoglycemic agents, thyroid and anti-thyroid preparations, terine relaxants, erythropoietic drugs, mucolytics, DNA and genetic modifying drugs, and nutritional supplements, including nutraceuticals, micronutrients, vitamins and co-enzymes. The pharmaceutically acceptable salts and prodrugs of the medicaments are also included unless specified otherwise. Some of these medicaments may serve more than one purpose. Combinations of the foregoing types of optional medicaments can be used. Two or more medicaments that have activity against the same or different symptoms can be used together in a combination.

The particular amount of a medicament agent or its acid addition salt used in the confectionery composition varies depending upon the therapeutic dosage recommended or permitted. In general, the amount of medicament present is the ordinary dosage used in the treatment of cough, cold, flu, or other disease symptoms.

The confectionery compositions comprising cooling compositions can be of particular utility in the preparation of confectionery products, including, for example, compressed tablets such as mints, hard boiled candies, chocolates, chocolate-containing products, nutrient bars, nougats, gels, centerfill confections, fondants, panning goods, consumable thin films, and other confectionery formats. Edible confectioneries can be classified as either "hard" or "soft" confectionery items. In one embodiment a flavor-enhancing confectionery composition is used in a confectionery format, in particular a hard confectionery such as a lozenge. The confectionery compositions can be incorporated into an otherwise conventional hard or soft confectionery format using standard techniques and equipment known to those of ordinary skill in the art. The confectionery compositions can also be center filled and/or coated with hard, soft, or particulate coatings.

In general, a hard confectionery has a base composed of a mixture of sugar or sugar alcohols and other carbohydrate bulking agents, kept in an amorphous or glassy condition. This form is considered a solid syrup of sugars or sugar alcohols generally having from about 0.5 to about 1.5 weight percent moisture. Such materials normally contain up to about 92 weight percent corn syrup, up to about 55 weight percent sugar and from about 0.1 weight percent to about 5 weight percent water, all based on the weight of the base. The syrup component can be prepared from corn syrups high in fructose, but may include other materials.

In some embodiments, the hard confectioneries are prepared using conventional methods and equipments, such as fire cookers, vacuum cookers, or scraped-surface cookers (also referred to as high speed atmospheric cookers). When using a fire cooker, the desired quantity of carbohydrate bulking agent is dissolved in water by heating the agent in a kettle until the bulking agent dissolves. Additional bulking agent may then be added and cooking continued until a final temperature of, for example, 145° to 156°C is achieved. The batch is then cooled and worked as a plastic-like mass to incorporate additives separately or in the form of one or more concentrates.

In vacuum cookers, a carbohydrate-bulking agent is boiled to about 125° to about 132°C, vacuum is applied, and additional water is boiled off without extra heating. When cooking is complete, the mass is a semi-solid and has a plastic-like consistency. At this point, additives, separately or in the form of one or more concentrates are admixed in the mass by routine mechanical mixing operations.

A high-speed atmospheric cooker uses a heat exchanger surface. A film of a hard confectionery composition is spread on a heat exchange surface, rapidly heated to a suitable temperature, for example 165° to 170°C, and then rapidly cooled, for example to 100° to 120°C. Additives, separately or in the form of one or more concentrates can then be worked into the plastic mass.

In the foregoing methods, the additives are specifically mixed for a time, for example about 4 to about 10 minutes, effective to provide a uniform distribution of these agents. Once the hard confectionery mass has been properly tempered, it can be cut into workable portions or formed into desired shapes as is known in the art.

The process of preparation can be adapted by those skilled in the art to provide solid dosage forms having a desired configuration, including single-layer, multi-layer having two or more layers (e.g., 3 layers), and forms having a center core.

The preparation of soft confectionery such as nougat, involves conventional methods, such as the combination of two primary components, namely (1) a high boiling syrup such as a corn syrup, hydrogenated starch hydrolysate or the like, and (2) a relatively light textured frappe. The high boiling syrup, or "bob syrup" of the soft confectionery is relatively viscous and has a higher density than the frappe component, and frequently contains a substantial amount of carbohydrate bulking agent such as a hydrogenated starch hydrolysate. The frappe is generally prepared from egg albumin, gelatin, vegetable proteins, such as soy-derived compounds, sugarless milk derived compounds, such as milk proteins, and combinations thereof. The frappe is generally relatively light, and may, for example, range in density from about 0.5 to about 0.7 grams/milliliter. Conventionally, the final nougat composition is prepared by the addition of the bob syrup to the frappe under agitation, to form the basic nougat mixture. For example, the frappe component is prepared first and thereafter the syrup component is slowly added under agitation at a suitable temperature, for example at least about 65°C, and specifically at least about 100°C. After formation of a uniform mixture, the mixture is cooled, for example to below about 80°C, at which point additional ingredients such as flavoring, additional carbohydrate bulking agent, coloring agents, preservatives, medicaments, and the like may be added with further mixing. The mixture is then formed into suitable confectionery shapes.

Center filling and coating for confectioneries is much the same as that described above for chewing gum products.

In addition to being used in confectioneries, including chewing gum, the cooling agents may be used in beverages. Thus, one embodiment is a beverage, comprising: a first cooling agent having the structure 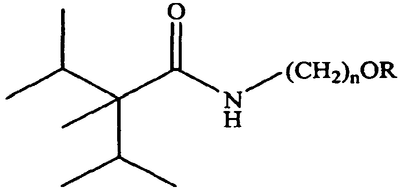 wherein R is C₁-C₆ alkyl, and n is 2 or 3; wherein the first cooling agent has a water solubility at 25°C of about 0.05 to about 10 grams per liter; and a second cooling agent having a water solubility at 25°C differing from the water solubility of the first cooling agent by at least a factor of 2. The water solubility of the first cooling agent specifically may be about 0.07 to about 9 grams per liter, or about 0.07 to about 8 grams per liter. The water solubilities of the first and second cooling agents may differ by a factor of at least 3, or at least 4.

Beverages that may benefit from the incorporation of a cooling agent include, for example, non-alcoholic beverages and alcoholic beverages. Non-alcoholic beverages benefiting from the incorporation of a cooling agent include coffee-based beverages; dairy-based beverages; carbonated soft drinks such as ginger ales; teas; fruit drinks; and sports drinks. Alcoholic beverages benefiting from the incorporation of a cooling agent include beers, spirits, liqueurs, wines, and cocktails (e.g., mojitos, grasshoppers, and stingers).

In some beverage embodiments, the first cooling agent may be selected from, for example, N-(2-hydroxyethyl)-2-isopropyl-2,3-dimethylbutanamide, N-(3-ethoxypropyl)-2-isopropyl-2,3-dimethylbutanamide, N-(3-propoxypropyl)-2-isopropyl-2,3-dimethylbutanamide, N-(3-butoxypropyl)-2-isopropyl-2,3-dimethylbutanamide, and combinations thereof. In some embodiments, the first cooling agent is N-(2-hydroxyethyl)-2-isopropyl-2,3-dimethylbutanamide, N-(3-ethoxypropyl)-2-isopropyl-2,3-dimethylbutanamide, or a combination thereof.

The second cooling agent is selected from, for example, menthol, N-ethyl-p-menthane-3-carboxamide, the ethyl ester of N-[[5-methyl-2-(1-methylethyl)cyclohexyl]carbonyl]glycine, N-ethyl-2,2-diisopropylbutanamide, N-(1,1-dimethyl-2-hydroxyethyl)-2,2-diethylbutanamide, and combinations thereof.

The beverage may comprise the first and second cooling agents in amounts effective to impart a cooling sensation when the beverage is consumed. Selecting cooling agent amounts will depend on factors including the chemical structures of the cooling agents employed, whether or not the cooling agents exhibit synergistic cooling effects, whether or not the cooling agents are treated in any way to delay or accelerate their availability to cold receptors in the individual consuming the beverage, and the desired level of cooling sensation to be imparted. Typically, the first and second cooling agent may each independently be used in an amount of about 0.0001 to about 1 weight percent, based on the total weight of the beverage. Specifically, the amounts of the first and second cooling agents may be, independently, about 0.0005 to about 0.5 weight percent, more specifically about 0.001 to about 0.3 weight percent, still more specifically about 0.005 to about 0.2 weight percent.

The beverage may, optionally, further comprise one or more of the taste potentiators described above in the context of chewing gum compositions. In some embodiments, the beverage comprises a taste potentiator comprising 3-hydroxybenoic acid and a dihydroxybenzoic acid selected from the group consisting of 2,4-dihydroxybenzoic acid, 3,4-dihydroxybenzoic acid, and combinations thereof. In some embodiments, the beverage comprises trehalose as a taste potentiator.

The beverage compositions described herein can contain a portion of added water. As used herein "added water" does not include water incidentally added to the composition through other components such as milk or a fruit juice component, for example. The beverage compositions can contain up to about 99 weight percent added water based on the total weight of the composition, specifically about 0.1 to about 90 weight percent, more specifically about 1.0 to about 80 weight percent, and yet more specifically about 5.0 to about 70 weight percent added water, based on the total weight of the composition.

The added water is specifically purified or treated prior to use using processes well-known in the art such as filtration, deionization, distillation, or reverse osmosis.

The beverage composition may be, for example, a juice-based composition, a milk-based composition, an alcoholic composition, a carbonated composition, a frozen composition, a gel composition, or a combination thereof.

Juice-based compositions generally contain a juice component obtained from fruit or vegetable. The juice component can be used in any form such as a juice form, a concentrate, an extract, a powder, or the like.

Suitable juices include, for example, citrus juice, non-citrus juice, or combinations thereof, which are known for use in beverages. Examples of such juices include, non-citrus juices such as apple juice, grape juice, pear juice, nectarine juice, currant juice, raspberry juice, gooseberry juice, blackberry juice, blueberry juice, strawberry juice, custard-apple juice, pomegranate juice, guava juice, kiwi juice, mango juice, papaya juice, watermelon juice, cantaloupe juice, cherry juice, cranberry juice, peach juice, apricot juice, plum juice, and pineapple juice; citrus juices such as orange juice, lemon juice, lime juice, grapefruit juice, and tangerine juice; and vegetable juice such as carrot juice and tomato juice; and a combination comprising at least one of the foregoing juices.

Unless otherwise indicated, juice as used can include fruit or vegetable liquids containing a percentage of solids derived from the fruit or vegetable, for example pulp, seeds, skins, fibers, and the like, and pectin, which is naturally occurring in the fruit or vegetable. The amount of solids in the juice can be about 1 to about 75 weight percent, specifically about 5 to about 60 weight percent, more specifically about 10 to about 45 weight percent, and yet more specifically about 15 to about 30 weight percent each based on the total weight of the juice. Higher concentrations of solids can be found in juice concentrates, purees, and the like.

The amount of juice component present in the juice-based composition generally can be about 0.1 weight percent to about 95 weight percent based on the total weight of the composition, specifically about 5 weight percent to about 75 weight percent, and more specifically about 10 weight percent to about 50 weight percent each based on the total weight of the composition. Amounts may vary depending upon whether the composition is a concentrate or a ready to drink beverage, for example. The remaining components in the juice-based composition can be added water or other suitable liquid, a sweetening agent, a flavoring agent, or other additives as described herein.

The juice-based composition can be non-carbonated or carbonated.

In one embodiment, the juice-based composition is fortified with solubilized calcium in the form of calcium carbonate, calcium lactate, calcium oxide, or calcium hydroxide, for example. A food-grade acid is added to the calcium fortified juice-based composition to improve the solubility of calcium. Exemplary food-grade acids suitable for use in the juice-based composition are further discussed herein, specifically citric acid, malic acid, and a combination comprising at least one of the foregoing food-grade acids.

In some embodiments, the juice-based composition can be formed from a fruit or vegetable using a hot break or cold break process. In both processes, the fruit or vegetable is macerated and passed through conventional equipment to separate out seeds, skins and other undesired solids. The composition is then concentrated by conventional techniques. In hot break processes, the fruit or vegetable is typically heated during maceration or immediately thereafter to deactivate enzymes that may degrade the product and decrease the viscosity of the product. In cold break processes, the fruit or vegetable typically are processed at lower temperatures than hot break. A hot break process accordingly may provide a thicker product than those produced by a cold break process.

In one embodiment, the juice-based composition is pasteurized to destroy unwanted microorganisms. Suitable pasteurization conditions of juice-based compositions can be selected by one of ordinary skill in the art without undue experimentation using the guidelines provided. An exemplary pasteurization process to sterilize the juice-based composition comprises heating the composition to about 60 to about 80°C for about 6 to about 15 minutes in an aseptic environment.

In another embodiment, the juice-based composition is filled into a beverage container and then subjected to pasteurization conditions. Alternatively, the composition is hot-filled into a beverage container at temperatures sufficient to sterilize the composition in the container.

In another embodiment, the juice-based composition can contain a preservative allowing the composition to be cold-filled into a beverage container without the need for pasteurization. Specifically, the preservatives can be added to lower the pH level of the beverage to pH of about 3 to about 4.5. Suitable preservatives are discussed in detail herein.

Milk-based compositions generally contain a dairy component that can contain varying amounts of milk proteins (e.g., casein, whey protein, and the like), fats, lactose, and water. Exemplary dairy components include yogurt, cream, whole milk, low or reduced fat milk, skim milk, milk solids, condensed milk, and a combination comprising at least one of the foregoing dairy components.

In some embodiments, non-dairy components may replace part or all of the dairy components in the milk-based composition. Suitable non-dairy components include soy milk, almond milk, coconut milk, rice milk, and the like, and a combination comprising at least one of the foregoing.

Stabilizers can be added to the milk-based composition to prevent precipitation. Exemplary stabilizers include hydrocolloids such as pectin, propylene glycol alginate, and the like, as well as the stabilizers described further herein.

The amount of milk proteins in a milk-based beverage composition can be about 0.1 to about 10 weight percent based on the total weight of the milk-based beverage composition, specifically about 0.5 to about 5 weight percent, and more specifically about 1.0 to about 4 weight percent.

The milk-based composition can contain a sweetening agent, coloring agent, or other additives as disclosed herein. The milk-based composition can be non-carbonated or carbonated.

In some embodiments, the milk-based beverage is lactose free.

The process for preparing milk-based beverage compositions generally includes mixing and emulsifying a dairy component or non-dairy component with an emulsifier to form an emulsified component. The emulsified component can be pasteurized, cooled, and blended with a second component, which can contain a flavoring agent, a sweetening agent, other additives, or water or other suitable liquid to form a beverage composition. The blending can be performed under aseptic conditions to ensure product integrity.

Suitable conditions for the pasteurization of milk-base compositions can be selected by one of ordinary skill in the art without undue experimentation using the guidelines provided. An exemplary pasteurization process to sterilize the emulsified component or other dairy component can be effected at temperatures of about 130 to about 140°C for about 30 seconds to about 2 minutes in an aseptic environment. Alternatively, the pasteurization can be performed at about 115 to about 125°C for about 20 to about 30 minutes in an aseptic environment.

In another embodiment, the milk-based composition is filled into a beverage container and then subjected to the pasteurization conditions.

The beverage compositions described herein may further comprise an alcoholic composition. Examples of suitable alcohol compositions include, hop/malt/grain-based alcohol composition such as ale, lager, shandy, beer, including low alcohol beers ("near beer"), etc.; cider, spirit, liqueur, wine, or a combination comprising at least one of the foregoing. In some embodiments, the level of alcohol, as measured by the amount of ethanol contained in the beverage composition can be about 0.5 to about 20 volume % based on the total volume of the beverage composition.

The beverage composition can contain a dissolved gas under pressure such as carbon dioxide, nitrogen, oxygen, nitrous oxide, or a combination comprising at least one of the foregoing. The beverages can contain about 0.1 to about 5.0 volumes of a suitable gas per volume of the beverage composition, specifically about 1.0 to about 4.5 volumes, and more specifically about 2.0 to about 3.5 volumes. The gas can be provided in the beverage by forceful introduction of the gas under pressure to the beverage composition. Cooling the beverage composition allows for greater amounts of gas to be solubilized by the beverage composition.

Carbonation can be used to enhancing the flavor, sweetness, taste, and mouth-feel of the composition. Additionally, carbonation lowers the pH of the composition.

In one embodiment, the carbonation can be added to the finished, noncarbonated beverage composition, which contains all of the desired beverage components.

In another embodiment, the carbonation is added to a desired volume of water to form a carbonated water. The carbonated water can then be combined with a composition such as a beverage concentrate or beverage syrup to produce the finished carbonated beverage composition.

Once the carbonated beverage composition has been prepared, the carbonated beverage composition can be packaged in containers and sealed using methods, packaging, and equipment selected by those of ordinary skill in the art without undue experimentation.

In some embodiments, carbonation can be added at the point of consumption. For example, in a restaurant or convenience store, a fountain beverage consisting of a beverage syrup and a source of carbonation is prepared for imminent consumer consumption.

A "frozen beverage composition" as used herein includes a beverage composition having ice crystals suspended therein to provide a viscous, yet drinkable beverage. The consistency of the frozen beverage composition allows it to have a "slushy" or "spoonable" consistency. The ice crystals can be present in the frozen beverage composition in an amount of about 20 to about 90 weight percent, specifically about 30 to about 70 weight percent, and yet more specifically about 40 to about 50 weight percent ice solids each based on the total weight of the frozen beverage composition.

Due to the lower temperature of the frozen beverage composition compared with other beverages, choice in the amount of flavoring agent and/or sweetening agent can be different. Suitable amounts of flavoring agent and sweetening agent can be selected by one of ordinary skill in the art without undue experimentation.

The frozen beverage composition can contain a buffering salt, which aids in lowering the freezing point of the beverage composition and to maintain the "slushy" texture. Suitable buffering salts include sodium, potassium, and calcium salts of citric acid or phosphoric acid: sodium citrate, potassium citrate, disodium phosphate, dipotassium phosphate, monocalcium phosphate, tricalcium phosphate, and a combination comprising at least one of the foregoing buffering salts.

A "gel beverage composition" as used herein includes a beverage composition having a thickening agent to provide a viscous, yet drinkable beverage. The consistency of the gel beverage composition allows it to have a "semi-solid" or "spoonable" consistency. Exemplary thickening agents (sometimes referred to as hydrocolloids) include natural and synthetic gums, for example locust bean gum, guar gum, gellan gum, xanthan gum, gum ghatti, modified gum ghatti, tragacanth gum, carrageenan, and the like; natural and modified starches, for example pregelatinized starch (corn, wheat, tapioca), pregelatinized high amylose-content starch, pregelatinized hydrolyzed starches (maltodextrins, corn syrup solids), chemically modified starches such as pregelatinized substituted starches (e.g., octenyl succinate), and the like; cellulose derivatives, for example carboxymethylcellulose, sodium carboxymethylcellulose, and the like; polydextrose; whey or whey protein concentrate; pectin; gelatin; and a combination comprising at least one of the foregoing thickening agents.

Due to the textural difference of the gel beverage composition compared with other beverages, choice in the amount of flavoring agent and/or sweetening agent can be different. Suitable amounts of flavoring agent and sweetening agent can be selected by one of ordinary skin in the art without undue experimentation.

Flavoring agents can be included in the beverage compositions. Flavoring agents include those flavors known to one of ordinary skill in the art, such as natural flavors, artificial flavors, spices, seasonings, and the like. Exemplary flavoring agents include synthetic flavor oils and flavoring aromatics and/or oils, oleoresins, essences, distillates, and extracts derived from plants, leaves, flowers, fruits, and so forth, and a combination comprising at least one of the foregoing.

Exemplary flavor oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil; useful flavoring agents include artificial, natural and synthetic fruit flavors such as vanilla, and citrus oils including lemon, orange, lime, grapefruit, yazu, sudachi, and fruit essences including apple, pear, peach, grape, blueberry, strawberry, raspberry, cherry, plum, prune, raisin, cola, guarana, neroli, pineapple, apricot, banana, melon, apricot, ume, cherry, raspberry, blackberry, tropical fruit, mango, mangosteen, pomegranate, papaya and so forth. Additional exemplary flavors imparted by a flavoring agent include a milk flavor, a butter flavor, a cheese flavor, a cream flavor, and a yogurt flavor; a vanilla flavor; tea or coffee flavors, such as a green tea flavor, an oolong tea flavor, a tea flavor, a cocoa flavor, a chocolate flavor, and a coffee flavor; mint flavors, such as a peppermint flavor, a spearmint flavor, and a Japanese mint flavor; spicy flavors, such as an asafetida flavor, an ajowan flavor, an anise flavor, an angelica flavor, a fennel flavor, an allspice flavor, a cinnamon flavor, a chamomile flavor, a mustard flavor, a cardamom flavor, a caraway flavor, a cumin flavor, a clove flavor, a pepper flavor, a coriander flavor, a sassafras flavor, a savory flavor, a Zanthoxyli Fructus flavor, a perilla flavor, a juniper berry flavor, a ginger flavor, a star anise flavor, a horseradish flavor, a thyme flavor, a tarragon flavor, a dill flavor, a capsicum flavor, a nutmeg flavor, a basil flavor, a marjoram flavor, a rosemary flavor, a bayleaf flavor, and a wasabi (Japanese horseradish) flavor; a nut flavor such as an almond flavor, a hazelnut flavor, a macadamia nut flavor, a peanut flavor, a pecan flavor, a pistachio flavor, and a walnut flavor; alcoholic flavors, such as a wine flavor, a whisky flavor, a brandy flavor, a rum flavor, a gin flavor, and a liqueur flavor; floral flavors; and vegetable flavors, such as an onion flavor, a garlic flavor, a cabbage flavor, a carrot flavor, a celery flavor, mushroom flavor, and a tomato flavor.

In some embodiments, other flavoring agents include aldehydes and esters such as cinnamyl acetate, cinnamaldehyde, citral diethylacetal, dihydrocarvyl acetate, eugenyl formate, p-methylamisol, and so forth can be used. Further examples of aldehyde flavorings include acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), and the like. Generally any flavoring or food additive such as those described in Chemicals Used in Food Processing, publication 1274, pages 63-258, by the National Academy of Sciences, can be used. This publication is incorporated herein by reference.

The flavoring agents can be used in liquid or solid/dried form and can be used individually or in admixture. When employed in dried form, suitable drying means such as spray drying an oil can be used. Alternatively, the flavoring agent is absorbed onto water-soluble materials, such as cellulose, starch, sugar, maltodextrin, gum arabic and so forth or can be encapsulated. In still other embodiments, the flavoring agent is adsorbed onto silicas, zeolites, and the like. The techniques for preparing such dried forms are well known.

In some embodiments, the flavoring agents are used in many distinct physical forms. Without being limited thereto, such physical forms include free forms, such as spray dried, powdered, beaded forms, encapsulated forms, emulsions such as caramel or gum arabic emulsions, and a combination comprising at least one of the foregoing physical forms.

The particular amount of the flavoring agent effective for imparting flavor characteristics to the composition will depend upon several factors including the flavor, the flavor impression, and the like.

Suitable amounts of the flavoring agent can be selected by one of ordinary skill in the art without undue experimentation using guidelines provided. In one embodiment, the flavoring agent can be present in a beverage composition from about 0.1 to about 8.0 weight percent based on the total weight of the beverage composition, specifically about 0.4 to about 6 weight percent, and more specifically about 1.0 to about 3.0 weight percent each based on the total weight of the beverage composition.

The flavoring agent may additionally contain weighting agents, emulsifiers, emulsion stabilizers, antioxidants, liquid vehicles, and the like.

The term "weighting agent" as used herein means any material used to adjust the specific gravity of a material whose specific gravity is lighter or lower than the specific gravity of water. In some embodiments, flavoring agents with specific gravities lower that the specific gravity of water are combined with weighting agents. Without adjusting the specific gravity of such flavoring agents or other materials with specific gravities lower than water, they may rise to the upper surface of the beverage composition. Weighting agents can include, but are not limited to brominated vegetable oil, ester gums, SAIB (sucrose acetate isobutyrate), and a combination comprising at least one of the foregoing.

Other approaches to prevent or delay materials with specific gravities lower than the specific gravity of water from rising to the upper surface of a beverage composition can be to increase the viscosity of the beverage composition or to reduce the particle size of the material with the lower specific gravity. Thus, in some embodiments, flavoring agents without weighting agents remain stable in a beverage composition.

Some embodiments also may include a sweetening agent to provide a sweet taste to the composition. Sweetening agents may include sugar sweeteners, sugarless sweeteners, and a combination comprising at least one of the foregoing.

Sugar sweeteners generally include saccharides. Suitable sugar sweeteners include monosaccharides, disaccharides, and polysaccharides such as sucrose (sugar), dextrose, maltose, dextrin, xylose, ribose, glucose, mannose, galactose, fructose (levulose), lactose, invert sugar, fructooligosaccharide syrups, partially hydrolyzed starch, corn syrup solids, such as high fructose corn syrup, sorbitol, mannitol, maltitol, xylitol, erythritol, polysaccharide polyols, maltitol syrups, hydrogenated starch hydrolysates, polydextrose, and combinations thereof.

Suitable sugarless sweetening agents for use in the concentrate include sugar alcohols (or polyols), such as glycerol, sorbitol, xylitol, mannitol, galactitol, maltitol, hydrogenated isomaltulose (isomalt), lactitol, erythritol, hydrogenated starch hydrolysate, polyglycitol (e.g., syrup or powder), stevia and a combination comprising at least one of the foregoing.

Suitable hydrogenated starch hydrolysates include those disclosed in U.S. Pat. Nos. 25,959, 3,356,811, 4,279,931 and various hydrogenated glucose syrups and/or powders which contain sorbitol, hydrogenated disaccharides, hydrogenated higher polysaccharides, and a combination comprising at least one of the foregoing. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN, a line of commercially available products manufactured by Roquette Freres of France, and HYSTAR, a line of commercially available products manufactured by Lonza, Inc., of Fairlawn, N.J., also may be useful.

In some embodiments, the sweetening agent is present in amounts of about 0.01 to about 25 weight percent based on the total weight of the composition, specifically about 0.1 to about 15 weight percent, more specifically 1.0 to about 10 weight percent, and yet more specifically 2.0 to about 5.0 weight percent each based on the total weight of the composition.

Some embodiments may include high-intensity sweeteners in the composition. Without being limited to particular sweeteners, representative categories and examples include:
(a) water-soluble sweetening agents such as dihydrochalcones, monellin, steviosides, glycyrrhizin, dihydroflavenol, and sugar alcohols such as sorbitol, mannitol, maltitol, and L-aminodicarboxylic acid aminoalkenoic acid ester amides, such as those disclosed in U.S. Pat. No. 4,619,834, and a combination comprising at least one of the foregoing;
(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and a combination comprising at least one of the foregoing;
(c) dipeptide based sweeteners, such as L-aspartic acid derived sweeteners, such as L-aspartyl-L-phenylalanine methyl ester (Aspartame) and materials described in U.S. Pat. No. 3,492,131, L-alpha-aspartyl-N-(2,2,4,4-tetramethyl-3-thietanyl)-D-alaninamide hydrate (Alitame), N-[N-(3,3-dimethylbutyl)-L-aspartyl]-L-phenylalanine 1-methyl ester (Neotame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, and a combination comprising at least one of the foregoing;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichlorol',6'-dideoxysucrose; 4-chloro-4-deoxy-alpha-D-galactopyranosyl-1,6-dichloro-1,6-dideoxy-beta-D-fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,1',6'-tetrachloro4,6,1',6'-tetradeoxygalacto-sucrose; and 4,6,1',6'-tetradeoxy-sucrose, and a combination comprising at least one of the foregoing;
(e) protein based sweeteners such as thaumaoccous danielli (Thaumatin I and II); and
(f) the naturally occurring sweetener monatin (2-hydroxy-2-(indol-3-ylmethyl)-4-aminoglutaric acid) and its derivatives, or lo han kuo and its derivatives including mogrosides.

Many sweetening agents, including some previously discussed, can be categorized as natural sweeteners, for example L-alanine, arabinose, banana extract, carob, cellobiose, corn syrup (including high fructose corn syrup and corn syrup solids), dextrin, dextrose, Dioscoreophyllum cumminsii (Serendipity Berry), erythritol, fructooligosaccharide (FOS), fructose, (including "liquid fructose"), galactose, glucose, glycine, glycyrrhizin, honey, inulin, isomalt, invert sugar, lactitol, lactose, lo han (lo han kuo; lo han guo; lohan guo; lohan kuo), maltitol, maltodextrin, maltose, mannitol, mannose, monatin, maple syrup, molasses, partially hydrogenated starch hydrolysate, partially hydrolyzed starch, polydextrose solution, polyglycitol, raftilose, miraculin (Richadella dulcifica (Miracle Berry)), ribose, rice syrup, sorbitol, sorbose, stevia, stevioside, sucralose, sucrose, sugar beets, (dehydrated filaments of), D-tagatose, thaumatin, xylitol, xylose, and a combination comprising at least one of the foregoing.

The sweetening agent can be used individually or as mixtures.

The sweetening agents can be used in many distinct physical forms well-known in the art to provide an initial burst of sweetness and/or a prolonged sensation of sweetness. Without being limited thereto, such physical forms include free forms, such as spray dried, powdered, beaded forms, encapsulated forms, and a combination comprising at least one of the foregoing. In general, an effective amount of sweetener can be utilized to provide the level of sweetness desired, and this amount may vary with the sweetener selected. Suitable amounts for each type of sweetener can be selected by one of ordinary skill in the art without undue experimentation.

In some embodiments, the beverage composition may include optional additives such as antioxidants, amino acids, caffeine, coloring agents ("colorants", "colorings"), emulsifiers, flavor potentiators, food-grade acids, minerals, micronutrients, plant extracts, phytochemicals ("phytonutrients"), preservatives, salts including buffering salts, stabilizers, thickening agents, medicaments, vitamins, and a combination comprising at least one of the foregoing additives. Those of ordinary skill in the art will appreciate that certain additives may meet the definition or function according to more than one of the above-listed additive categories.

Suitable salts for use in the composition include, alkali or alkaline earth metal chlorides, glutamates, and the like. For example, monosodium glutamate, potassium chloride, sodium chloride, and a combination comprising at least one of the foregoing salts. The salts can be added to the beverage as a flavor potentiator as previously described.

Suitable food-grade acids for use in the composition include, for example, acetic acid, adipic acid, ascorbic acid, butyric acid, citric acid, formic acid, fumaric acid, glyconic acid, lactic acid, malic acid, phosphoric acid, oxalic acid, succinic acid, tartaric acid, and a combination comprising at least one of the foregoing food-grade acids. The food-grade acid can be added as acidulant to control the pH of the beverage and also to provide some preservative properties; or to stabilize the beverage.

The pH of the beverage may also be modified by the addition of food-grade compounds such as ammonium hydroxide, sodium carbonate, potassium carbonate, sodium bicarbonate, and the like, and a combination comprising at least one of the foregoing. Additionally, the pH of the beverage can be adjusted by the addition of carbon dioxide. Further, in some embodiments, buffering agents including, but not limited to citrates such as sodium citrate, can be used to adjust the pH of the beverage.

In some embodiments, the tartness of the composition may be varied by selecting and combining acids to provide a desired tartness perception. Some factors to consider in determining a desired tartness include, for example, the acid's dissociation constant, solubility, pH, etc. These variables can be measured by measuring the titratable acidity of the beverage composition. Tartness can also be measures by standard sensory science techniques such as those described by H. Moskowitz in "Sourness of Acid Mixtures" as published in The Journal of Experimental Psychology, April 1974, 102(4), 640-7; and in "Ratio Scales of Acid Sourness" as published in Perception and Psychophysics, 9:371-374, 1971.

Coloring agents can be used in amounts effective to produce a desired color for the composition. The colorants may include pigments, natural food colors and dyes suitable for food, drug and cosmetic applications. An extensive recitation of F.D.& C. colorants and their corresponding chemical structures can be found in the Kirk-Othmer Encyclopedia of Chemical Technology, 3rd Edition, in volume 5 at pages 857-884.

As classified by the United States Food, Drug, and Cosmetic Act (21 C.F.R. 73), colors can include exempt from certification colors (sometimes referred to as natural even though they can be synthetically manufactured) and certified colors (sometimes referred to as artificial), and a combination comprising at least one of the foregoing. In some embodiments, exemplary exempt from certification or natural colors can include, annatto extract, (E160b), bixin, norbixin, astaxanthin, dehydrated beets (beet powder), beetroot red/betanin (E162), ultramarine blue, caramel color (E150a), canthaxanthin (E161g), cryptoxanthin (E161c), rubixanthin (E161d), violanxanthin (E161e), rhodoxanthin (E161f), caramel (E150(a-d)), β-apo-8'-carotenal (E160e), β-carotene (E160a), alpha carotene, gamma carotene, ethyl ester of beta-apo-8 carotenal (E160f), flavoxanthin (E161a), lutein (E161b), cochineal extract (E120); carmine (E132), carmoisine/azorubine (E122), sodium copper chlorophyllin (E141), chlorophyll (E140), toasted partially defatted cooked cottonseed flour, ferrous gluconate, ferrous lactate, grape color extract, grape skin extract (enocianina), anthocyanins (E163), haematococcus algae meal, synthetic iron oxide, iron oxides and hydroxides (E172), fruit juice, vegetable juice, dried algae meal, tagetes (Aztec marigold) meal and extract, carrot oil, corn endosperm oil, paprika, paprika oleoresin, phaffia yeast, riboflavin (E101), saffron, titanium dioxide, turmeric (E100), turmeric oleoresin, amaranth (E123), capsanthin/capsorbin (E160c), lycopene (E160d), and a combination comprising at least one of the foregoing.

In some embodiments, exemplary certified colors can include FD&C blue #1, FD&C blue #2, FD&C green #3, FD&C red #3, FD&C red #40, FD&C yellow #5 and FD&C yellow #6, tartrazine (E102), quinoline yellow (E104), sunset yellow (E110), ponceau (E124), erythrosine (E127), patent blue V (E131), titanium dioxide (E171), aluminum (E173), silver (E174), gold (E175), pigment rubine/lithol rubine BK (E180), calcium carbonate (E170), carbon black (E153), black PN/brilliant black BN (E151), green S/acid brilliant green BS (E142), and a combination comprising at least one of the foregoing. In some embodiments, certified colors can include FD&C aluminum lakes. These consist of the aluminum salts of FD&C dyes extended on an insoluble substrate of alumina hydrate. Additionally, in some embodiments, certified colors can be included as calcium salts.

Acceptable coloring agents are specifically water-soluble coloring agents.

Suitable amounts of colorant to provide the desired visual effect can be selected by one of ordinary skill in the art without undue experimentation using guidelines provided. Exemplary amounts of coloring agents can be about 0.005 to about 15 weight percent, specifically about 0.01 to about 6 weight percent, and more specifically about 0.1 to about 2 weight percent each based on the total weight of the composition.

Emulsifiers can be added to the composition to prevent separation of the composition components by keeping ingredients dispersed. Emulsifiers can include molecules that have both a hydrophilic part and a hydrophobic part. Emulsifiers can operate at the interface between hydrophilic and hydrophobic materials of the beverage to prevent separation of the components of the composition. Suitable emulsifiers for use in the compositions include, for example, lecithin (e.g., soy lecithin); monoglycerides and diglycerides of long chain fatty acids, specifically saturated fatty acids, and more specifically, stearic and palmitic acid mono- and diglycerides; monoglycerides and diglycerides of acetic acid, citric acid, tartaric acid, or lactic acid; egg yolks; polysorbates (e.g., polysorbate 20, polysorbate 40, polysorbate 60, polysorbate 65, and polysorbate 80), propylene glycol esters (e.g., propylene glycol monostearate); propylene glycol esters of fatty acids; sorbitan esters (e.g., sorbitan monostearates, sorbitan tristearates, sorbitan monolaurate, sorbitan monooleate), Acacia (gum arabic), sucrose monoesters; polyglycerol esters; polyethoxylated glycerols; and the like, and a combination comprising at least one of the foregoing emulsifiers. Suitable emulsifying agents include those having a Hydrophobic/Lipophilic Balance (HLB) value of about 1 to about 20. The emulsifying agent may be used to form an oil-in-water emulsion or a water-in-oil emulsion, depending on the nature of the beverage.

The beverage composition can contain the emulsifier in an amount of about 0.01 to about 2.0, specifically about 0.05 to about 1.0, more specifically about 0.075 to about 0.75; and yet more specifically about 0.10 to about 0.50 weight percent each based on the total weight of the composition.

Certain components (sometimes referred to as hydrocolloids) that act as thickening agents which can impart added "mouth-feel" to the composition include natural and synthetic gums, for example locust bean gum, guar gum, gellan gum, xanthan gum, gum ghatti, modified gum ghatti, tragacanth gum, carrageenan, and the like; natural and modified starches, for example pregelatinized starch (corn, wheat, tapioca), pregelatinized high amylose-content starch, pregelatinized hydrolyzed starches (maltodextrins, corn syrup solids), chemically modified starches such as pregelatinized substituted starches (e.g., octenyl succinate), and the like; cellulose derivatives, for example carboxymethylcellulose, sodium carboxymethylcellulose, and the like; polydextrose; whey or whey protein concentrate; pectin; gelatin; and a combination comprising at least one of the foregoing thickening agents.

Preservatives, including antimicrobials, can be added to the composition to provide freshness and to prevent the unwanted growth of bacteria, molds, fungi, or yeast. The addition of a preservative, including antioxidants, may also be used to maintain the composition's color, flavor, or texture. Any suitable preservatives for use in food and beverage products can be incorporated into the compositions. Examples of suitable preservatives include benzoic acid alkali metal salts (e.g., sodium benzoate), sorbic acid alkali metal salts (e.g., potassium sorbate), ascorbic acid (Vitamin C), citric acid, calcium propionate, sodium erythorbate, sodium nitrite, calcium sorbate, butylated hydroxyanisole (BHA), butylated hydroxytoluene (BHT), ethylenediaminetetraacetic acid (EDTA), tocopherols (Vitamin E), straight chain polyphosphates, and a combination comprising at least one of the foregoing preservatives.

The beverage composition can contain the preservative or preservative combination in an amount of about 0.01 to about 0.50, specifically about 0.02 to about 0.30, more specifically about 0.03 to about 0.10; and yet more specifically about 0.05 to about 0.08 weight percent each based on the total weight of the composition.

The beverage composition can be fortified or enriched with vitamins, minerals, micronutrients, or other nutrients. Micronutrients can include materials that have an impact on the nutritional well being of an organism even though the quantity required by the organism to have the desired effect is small relative to macronutrients, such as protein, carbohydrate, and fat. Micronutrients can include, for example, vitamins, minerals, enzymes, phytochemicals, antioxidants, and a combination comprising at least one of the foregoing.

Suitable vitamins or vitamin precursors include ascorbic acid (Vitamin C), beta carotene, niacin (Vitamin B₃), riboflavin (Vitamin B₂), thiamin (Vitamin B₁), niacinamide, folate or folic acid, alpha tocopherols or esters thereof, Vitamin D, retinyl acetate, retinyl palmitate, pyridoxine (Vitamin B₆), folic acid (Vitamin B₉), cyanocobalimin (Vitamin B₁₂), pantothenic acid, biotin, and a combination comprising at least one of the foregoing vitamins.

In some embodiments, vitamins or vitamin precursors can include fat soluble vitamins such as vitamin A, vitamin D, vitamin E, and vitamin K, and a combination comprising at least one of the foregoing vitamins. In some embodiments, vitamins or vitamin precursors can include water soluble vitamins such as vitamin C (ascorbic acid), the B vitamins (thiamine or B₁, riboflavin or B₂, niacin or B₃, pyridoxine or B₆, folic acid or B₉, cyanocobalimin or B₁₂, pantothenic acid, biotin), and a combination comprising at least one of the foregoing vitamins.

Exemplary minerals include sodium, magnesium, chromium, iodine, iron, manganese, calcium, copper, fluoride, potassium, phosphorous, molybdenum, selenium, zinc, and a combination comprising at least one of the foregoing minerals. The minerals can be provided as a mineral salt, including carbonate, oxide, hydroxide, chloride, sulfate, phosphate, pyrophosphate, gluconate, lactate, acetate, fumarate, citrate, malate, amino acids and the like for the cationic minerals and sodium, potassium, calcium, magnesium, and the like for the anionic minerals.

The amount of vitamins or minerals provided in the compositions can be up to or exceeding amounts generally recognized as U.S. Recommended Daily amounts or the Recommended Daily Intake amounts established by the U.S. Food and Drug Administration.

In some embodiments exemplary micronutrients can include L-carnitine, choline, coenzyme Q 10, alpha-lipoic acid, omega-3-fatty acids, pepsin, phytase, trypsin, lipases, proteases, cellulases, and a combination comprising at least one of the foregoing micronutrients.

Antioxidants can include materials that scavenge free radicals. In some embodiments, exemplary antioxidants can include citric acid, rosemary oil, vitamin A, vitamin E, vitamin E phosphate, tocopherols, di-alpha-tocopheryl phosphate, tocotrienols, alpha lipoic acid, dihydrolipoic acid, xanthophylls, beta cryptoxanthin, lycopene, lutein, zeaxanthin, astaxanthin, beta-carotene, carotenes, mixed carotenoids, polyphenols, flavonoids, and a combination comprising at least one of the foregoing antioxidants.

Exemplary nutrients can also include amino acids such as L-tryptophan, L-lysine, L-leucine, L-methionine, 2-aminoethanesulfonic acid (taurine), L-carnitine, creatine, glucuronolactone, inositol, and a combination comprising at least one of the foregoing nutrients.

Phytochemicals ("phytonutrients") are plant derived compounds which may provide a beneficial effect on the health or well-being of the consumer. Phytochemicals include plant derived antioxidants, phenolic compounds including monophenols and polyphenols, and the like. Exemplary phytochemicals include lutein, lycopene, carotene, anthocyanin, capsaicinoids, flavonoids, hydroxycinnamic acids, isoflavones, isothiocyanates, monoterpenes, chalcones, coumestans, dihydroflavonols, flavanoids, flavanols, quercetin, flavanones, flavones, flavan-3-ols (catechins, epicatechin, epigallocatechin, epigallocatechingallate, and the like), flavonals (anthocyanins, cyanidine, and the like); phenolic acids; phytosterols, saponins, terpenes (carotenoids), and a combination comprising at least one of the foregoing phytochemicals.

The phytochemicals can be provided in substantially pure or isolated form or in the form of natural plant extracts. Suitable plant extracts which contain one or more phytochemicals include fruit skin extracts (grape, apple, crab apple, and the like), green tea extracts, white tea extracts, green coffee extract, and a combination comprising at least one of the foregoing extracts.

Various herbals, aromatic plants or plant parts or extracts thereof, can also be included in the beverage compositions for a variety of reasons such as for flavor or for their potential health benefits. Exemplary herbals include Echinacea, Goldenseal, Calendula, Rosemary, Thyme, Kava Kava, Aloe, Blood Root, Grapefruit Seed Extract, Black Cohosh, Ginseng, Guarana, Cranberry, Ginkgo Biloba, St. John's Wort, Evening Primrose Oil, Yohimbe Bark, Green Tea, Ma Huang, Maca, Bilberry, extracts thereof, and a combination comprising at least one of the foregoing herbals.

Beverage concentrate compositions can be in dry form (e.g., powder or tablet) or in liquid form (e.g., syrup, suspension, or emulsion). Concentrate compositions typically comprise the flavoring agent in a volume of liquid medium that is less than the volume of liquid medium found in the finished beverage composition. Other optional components in the concentrate include sweetening agents, coloring agents, and other additives such as food-grade acids, preservatives, and the like. The bulk of the liquid component of a finished beverage composition is not present in the concentrate to allow for reduced weight, volume, storage and shipping costs while at the same time allowing for increased shelf life of the concentrate versus beverage composition.

In one embodiment, the beverage concentrate composition is formulated to provide final beverage compositions upon dilution with about a 2-fold to about a 5-fold by volume, specifically about 3-fold to about a 4-fold by volume of a liquid. The liquid can be water, juice, dairy component, a non-dairy milk, ethanol, a combination comprising at least one of the foregoing, and the like. The liquid can be in noncarbonated or carbonated form.

In some embodiments, the beverage composition is subject to homogenization conditions, such as high pressure homogenization, to provide a homogenous composition. The beverage component used to prepare a beverage composition or concentrate composition can be homogenized alone, or alternatively, juice and other components can be homogenized together to form a homogenized beverage composition or homogenized concentrate composition.

High pressure homogenization can be used and in some embodiments, juice solids are mashed under pressure. In general, homogenization processes alter the size and distribution of the fruit or vegetable pulp particles. More specifically, homogenization may break down and uniformly distribute the lipophilic components, the fruit or vegetable pulp particles, etc. throughout the composition. In addition, homogenization may modify the fruit or vegetable fibers found in the composition by reducing the length and fraying the ends of the fibrous materials. This may allow the fiber strands to absorb more liquid. Overall, homogenization may produce a more uniform composition having increased viscosity. Homogenization accordingly may impart a smoother mouthfeel to the composition.

In some embodiments, homogenization pressures of about 1000 pounds per square inch (psi) to about 4000 psi are used. Any conventional homogenization equipment can be employed, such as equipment available from APV Gaulin, Alfa-Laval or Niro Soavi.

In some embodiments, the beverage composition is pasteurized to sterilize the product by destroying unwanted microorganisms. Exemplary processes to destroy or remove unwanted microorganisms include hot-filling, aseptic packaging, ozonation, radiation (e.g., ultraviolet light or gamma rays), membrane permeation, pulsed electric field, sonication, and the like.

Depending upon the components of the beverage composition, pasteurization can be effected at different temperatures. For dairy, grain, fruit or vegetable-based beverage compositions a pasteurization temperature of about 60 to about 80°C can be sufficient, specifically about 65 to about 75°C, and more specifically about 68 to about 72°C. More specifically, the fruit or vegetable-based beverage composition can be pasteurized by heating to the desired temperature for about 6 about 15 minutes in an aseptic environment, more specifically about 8 about 12 minutes, and yet more specifically about 9 about 11 minutes.

The beverage composition can be bulk pasteurized and then filled into a desired beverage container. In some embodiments, the beverage composition is filled into the desired beverage container, such as a glass bottle, and then subjected to the pasteurization conditions.

Alternatively, in some embodiments, the beverage composition is hot-filled into the desired beverage container. More specifically, the beverage composition is filled into the beverage container at temperatures sufficient to sterilize the composition in the container, for example about 85°C. After several minutes, the container and composition can be cooled down to about 32 to about 38°C.

In other embodiments, the beverage composition is cold-filled into a desired beverage container. In such embodiments, preservatives can be added to the beverage composition. More specifically, cold-filling the beverage involves adding the beverage to the beverage container at ambient temperature (e.g., about 21°C). Preservatives, such as those described herein, can be added to the composition to lower the pH level of the composition. Desirable pH values can be about 3 to about 4.5. Cold-filling with preservatives is used in some embodiments as an alternative to pasteurization.

In some embodiments, aseptic processes can be used to provide shelf stable, sterile beverages without the use of preservatives. The aseptic process involves sterilizing the beverage composition using an ultra-high temperature process that rapidly heats, then cools, the beverage composition. The time for sterilization can be about 3 to about 15 seconds at temperatures of about 195°F (90.6°C) to about 285°F (140.6°C). The sterilized beverage composition is then filled into sterilized aseptic packages within a sterile environment. Exemplary aseptic packages include a laminated container prepared from paperboard, polyethylene, e.g., low-density polyethylene (innermost layer), and aluminum; high density polyethylene (HDPE) plastic bottles; and the like.

The beverage compositions can be packaged, ready-to-drink, and can be shelf stable. Any type of beverage packaging can be used to package the beverage composition including glass bottles, plastic bottles and containers (e.g., polyethylene terephthalate or foil lined ethylene vinyl alcohol), metal cans (e.g., coated aluminum or steel), lined cardboard containers, and the like. Other beverage packaging material known to one of ordinary skill in the art can be used.

The features and advantages are more fully shown by the following examples, which are provided for purposes of illustration, and are not to be construed as limiting the invention in any way.

The invention is further illustrated by the following non-limiting examples.

### EXAMPLES 1-11

Eleven cooling compositions having the component weight percents specified in Table 2 are prepared by blending all components.

**Table 2**

| | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|
| N-(2-hydroxyethyl)-2-isopropyl-2,3-dimethylbutanamide | 100 | 0 | 90 | 0 | 60 | 30 | 20 | 30 | 40 | 50 | 40 |
| N-(3-ethoxypropyl)-2-isopropyl-2,3-dimethylbutanamide | 0 | 100 | 0 | 90 | 10 | 10 | 10 | 10 | 20 | 20 | 0 |
| N-(3-propoxypropyl)-2-isopropyl-2,3-dimethylbutanamide | 0 | 0 | 0 | 0 | 10 | 0 | 0 | 10 | 0 | 0 | 0 |
| N-(3-butoxypropyl)-2-isopropyl-2,3-dimethylbutanamide | 0 | 0 | 0 | 0 | 10 | 0 | 0 | 10 | 0 | 0 | 0 |
| Menthol | 0 | 0 | 10 | 10 | 10 | 20 | 20 | 10 | 20 | 0 | 0 |
| N-ethyl-p-menthane-3-carboxamide | 0 | 0 | 0 | 0 | 0 | 20 | 20 | 10 | 20 | 30 | 0 |
| N-ethyl-2,2-diisopropylbutanamide, | 0 | 0 | 0 | 0 | 0 | 10 | 10 | 10 | 0 | 0 | 0 |
| N-(1,1-dimethyl-2-hydroxyethyl)-2,2-diethylbutanamide | 0 | 0 | 0 | 0 | 0 | 10 | 20 | 10 | 0 | 0 | 0 |
| Ethyl 3-(p-menthane-3-carboxamido)acetate | 0 | 0 | 0 | 0 | 0 | 0 | 0 | 0 | 0 | 0 | 10 |
| Menthyl lactate | 0 | 0 | 0 | 0 | 0 | 0 | 0 | 0 | 0 | 0 | 10 |
| Menthyl acetate | 0 | 0 | 0 | 0 | 0 | 0 | 0 | 0 | 0 | 0 | 10 |
| Menthyl glutarate | 0 | 0 | 0 | 0 | 0 | 0 | 0 | 0 | 0 | 0 | 10 |
| Menthyl carbonates | 0 | 0 | 0 | 0 | 0 | 0 | 0 | 0 | 0 | 0 | 10 |
| Menthyl diols | 0 | 0 | 0 | 0 | 0 | 0 | 0 | 0 | 0 | 0 | 10 |
| Total | 100.00 | 100.00 | 100.00 | 100.00 | 100.00 | 100.00 | 100.00 | 100.00 | 100.00 | 100.00 | 100.00 |

### EXAMPLE 12, COMPARATIVE EXAMPLE 2

The cooling compositions of Examples 1-11 may be used to formulate a chewing gum composition having the component types and weight ranges specified as Example 12 in Table 3. In Table 3, "Ace-K" refers to Acesulfame-K, and "APM" refers to aspartame. A corresponding menthol-based gum composition is given as Comparative Example 1.

**Table 3**

| | Ex. 12 | C. Ex. 1 |
|---|---|---|
| Gum Base | 25 - 35 | 25 - 35 |
| Lecithin | 1 - 2 | 1 - 2 |
| Sorbitol | 50 - 55 | 50 - 55 |
| Glycerin | 5 - 10 | 5 - 10 |
| Wintergreen Flavor | 2 - 4 | 2 - 4 |
| Cooling Composition | 0.5 - 1.5 | -- |
| Menthol | -- | 0.5 - 1.5 |
| Color | 0.03 - 0.08 | 0.03 - 0.08 |
| Ace-K | 0.2 - 1.0 | 0.2 - 1.0 |
| APM | 0.5 - 2.0 | 0.5 - 2.0 |

### EXAMPLES 13-16, COMPARATIVE EXAMPLES 2-4

These examples illustrate the relationship between the water solubility of cooling agents and their release rate from chewing gum. Theoretical water solubilities were calculated with the logW tool as described above. Release rates from gum (so-called "chew-out" rates) after 60 minutes of chewing were determined with a gum chewing machine as follows. The following general gum formulation was used: gum base 37%, calcium carbonate, 5%, titanium dioxide 0.1%, lecithin 0.4%, mannitol 11%, glycerin 5.5%, peppermint oil 2.8%, cooling compounds 1.2%, high intensity sweetener blend (a blend of aspartame and acesulfame K) 1%, sorbitol q.s. to 100. The gum was prepared by blending all components in a kettle batch process. The chew-out test was conducted by placing a slab-shaped gum sample (4.15 mm × 11.00 × 31.04 millimeters) in the chamber of a Brabender twin-screw extruder (chamber volume about 100 milliliters), continuously kneading the gum sample to simulate mastication, and continuously circulating through the chamber 1 liter of distilled water at 37°C. After 60 minutes, a sample of the water was removed and analyzed by gas chromatography for dissolved cooling agent.

The results show that there is a correlation between water solubilities and percent release from gum after 60 minutes chewing, with higher water solubilities being associated with larger percent release. When percent release is plotted as a function of log10(water solubility), a near linear correlation is observed.

**Table 4**

| | Cooling Agent | w (g/L) | Rel. at 60 min (%) |
|---|---|---|---|
| Ex. 13 | N-(2-Hydroxyethyl)-2-isopropyl-2,3-dimethylbutanamide | 7.52 | 46.73 |
| Ex. 14 | N-(3-Ethoxypropyl)-2-isopropyl-2,3-dimethylbutanamide | 0.23 | 8.94 |
| Ex. 15 | N-(3-Propoxypropyl)-2-isopropyl-2,3-dimethylbutanamide | 0.12 | 3.60 |
| Ex. 16 | N-(3-Butoxypropyl)-2-isopropyl-2,3-dimethylbutanamide | 0.07 | 0.65 |
| C. Ex. 2 | Menthol | 0.45 | 15.6 |
| C. Ex. 3 | N-Ethyl-p-menthane-3-carboxamide (WS-3) | 0.47 | 5.63 |
| C. Ex. 4 | Monomenthyl glutarate | 0.22 | 0.0 |

### EXAMPLES 17-40, COMPARATIVE EXAMPLES 5-19

These examples illustrate the use of various cooling agent compositions in chewing gum. For all examples, the chewing gum consisted of 30 weight percent gum base, 9 weight percent calcium carbonate, 0.5 weight percent lecithin, 9 weight percent mannitol, 0.1 weight percent glycerin, 4 weight percent peppermint flavor, 1 weight percent high-intensity sweetener, the cooling agent composition specified in Table 5 (where cooling agent amounts are in parts per million by weight), and the balance sorbitol.

Chewing gums were prepared as common slab gum by mixing molten elastomers with limestone, lecithin, and a colorant first. Once a smooth texture was obtained, bulk sweeteners and glycerine were added. Flavor, cooling compounds and high-intensity sweetener were added in a last step consisting of three minutes of mixing at a temperature not exceeding 46°C.

Sensate attributes such as cooling sensation can be reliably and reproducibly measured using sensory analysis methods known as descriptive analysis techniques. The Spectrum^{™} method of descriptive analysis is described in MORTEN MEILGAARD, D.SC. ET AL., SENSORY EVALUATION TECHNIQUES (3d ed. 1999). The Spectrum^{™} method is a custom design approach meaning that the highly trained panelists who generate the data also develop the terminology to measure the attributes of interest. Further, the method uses intensity scales created to capture the intensity differences being investigated. These intensity scales are anchored to a set of well-chosen references. Using these references helps make the data universally understandable and usable over time. This ability to reproduce the results at another time and with another panel makes the data potentially more valuable than analytical techniques which offer similar reproducibility but lack the ability to fully capture the integrated sensory experiences as perceived by humans.

Sensory methods such as descriptive analysis can be conducted on a screening basis or on a full panel basis. When testing is done on a screening basis, there may be fewer panelists and those panelists may use an abbreviated scale such as a 5 point scale for rating the products. When testing is done on a full panel basis, more panelists may be involved and a complete scale such as a 15 point scale may be used. When choosing whether to use a screening or full panel basis for the testing, sensory scientists consider a range of variables such as cost, time, number of samples, etc. A screening basis may be used when time for generating the data is limited and/or when data from an abbreviated scale will adequately distinguish the samples.

The chewing gums shown above were evaluated by a twelve-person descriptive analysis sensory evaluation panel. Each gum sample was chewed for 30 minutes with a 5 minute aftertaste evaluation. Samples were randomized and presented blind, using three-digit codes. Two samples were evaluated per session, with a 25-minute clearing period between samples. All attributes were quantified on a 0-15 point scale. Standard rinsing agents were used, including crackers, yogurt, cheese, chocolate, Werther's Original candy, and water.

The gum with the Example 50 cooling composition was judged by the descriptive analysis panel to have very high but acceptable cooling intensity.

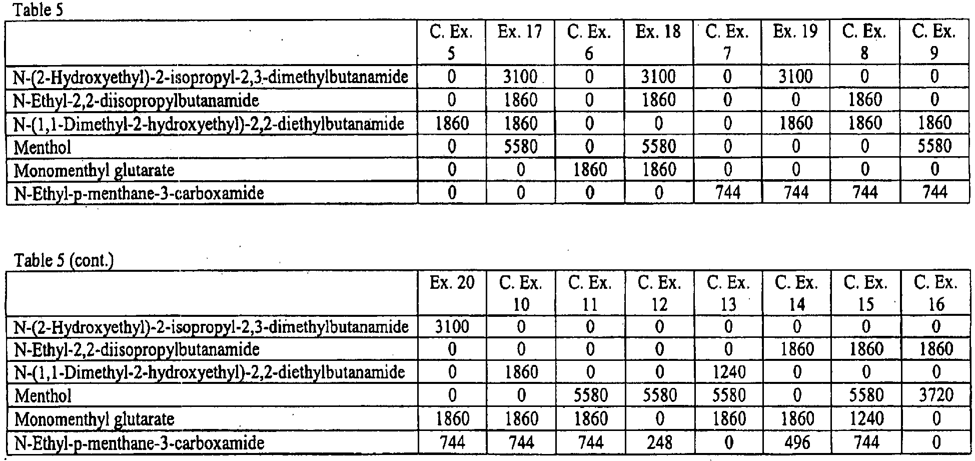

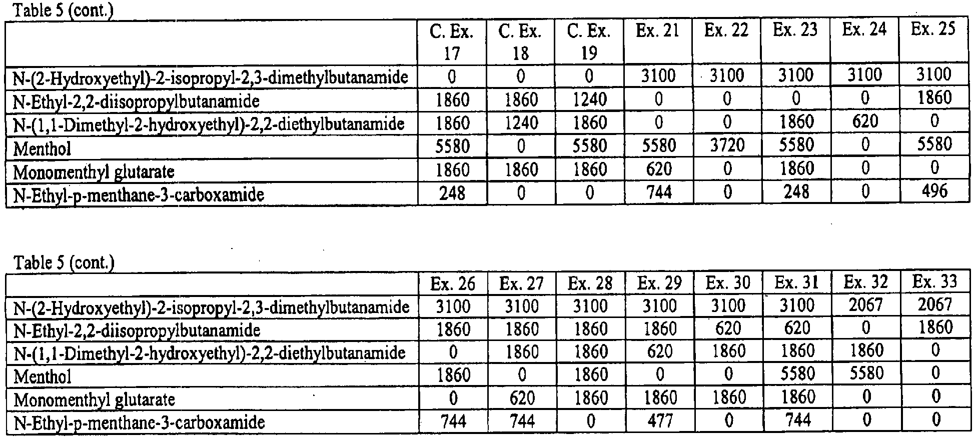

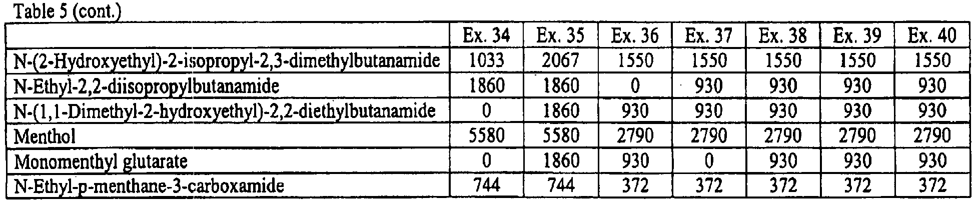

## Claims

1. A chewing gum comprising:
an elastomer; and
a first cooling agent having the structure 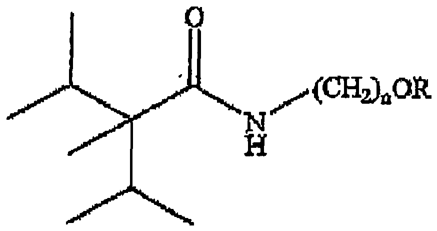 wherein R is C₁-C₆ alkyl, and n is 2 or 3; wherein the first cooling agent has a water solubility at 25°C of about 0.05 to about 10 grams per liter; and
a second cooling agent having a water solubility at 25°C differing from the water solubility of the first cooling agent by at least a factor of 2; wherein the second cooling agent is selected from the group consisting of menthol, N-ethyl-p-menthane-3-carboxamide,the ethyl ester of N-[[5-methyl-2-(1-methylethyl)cyclohexyl]carbonyl]glycine, N-ethyl-2,2-diisopropylbutanamide, N-(1,1-dimethyl-2-hydroxyethyl)-2,2-diethylbutanamide, and combinations thereof.

2. The chewing gum of claim 1, wherein the first cooling agent is selected from the group consisting of N-(2-hydroxyethyl)-2-isopropyl-2,3-dimethylbutanamide, N-(3-ethoxypropyl)-2-isopropyl-2,3-dimethylbutanamido, N-(3-propoxypropyl)-2-isopropyl-2,3-dimethylbutanamide, N-(3-butoxypropyl)-2-isopropyl-2,3-dimethylbutanamide, and combinations thereof.

3. The chewing gum of claim 1 or claim 2, comprising about 0.001 to about 15 weight percent of the first cooling agent, based on the total weight of the chewing gum.

4. The chewing gum of any of claims 1-3, wherein the first cooling agent has been treated with a release-modifying technique selected from the group consisting of encapsulation by spray drying, fluid-bed coating, spray chilling, or coacervation to give full or partial encapsulation; agglomeration to give partial encapsulation; fixation or absorption to give partial encapsulation; entrapment by extrusion; and adsorption onto silica or a zeolite.

5. The chewing gum of any of claims 1-4, comprising a cooling agent delivery system comprising the first cooling agent and an encapsulating material having a water absorption of about 5 to about 50% measured according to ASTM D570-98.

6. The chewing gum of any of claims 1-5, further comprising a taste potentiator and/or a high-intensity sweetener.

7. The chewing gum of any of claims 1-5, further comprising a high-intensity sweetener and a taste potentiator.

8. A confectionery or beverage, comprising:
a first cooling agent having the structure 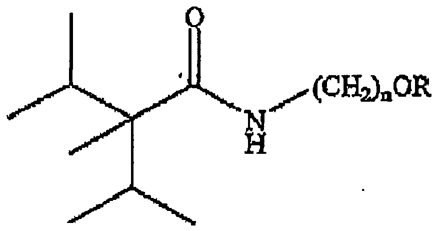 wherein R is C₁-C₆ alkyl, and n is 2 or 3; wherein the first cooling agent has a water solubility at 25°C of about 0.05 to about 10 grams per liter; and
a second cooling agent having a water solubility at 25°C differing from the water solubility of the first cooling agent by at least a factor of 2; wherein the second cooling agent is selected from the group consisting of menthol, N-ethyl-p-menthane-3-carboxamide, the ethyl ester of N-[[5-methyl-2-(1-methylethyl)cyclohexyl]carbonyl]glycine, N-ethyl-2,2-diisopropylbutanamide, N-(1,1-dimethyl-2-hydroxyethyl)-2,2-diethylbutanamide, and combinations thereof.

9. The confectionary or beverage of claim 8, wherein the first cooling agent is selected from the group consisting of N-(2-hydroxyethyl)-2-isopropyl-2,3-dimethylbutanamide N-(3-ethoxypropyl)-2-isopropyl-2,3-dimethylbutanamide, N-(3-pxopoxypropyl)-2-isopropyl-2,3-dimethylbutanamide, N-(3-butoxypropyl)-2-isopropyl-2,3-dimethylbutanamide, and combinations thereof.

10. The confectionary or beverage of claim 8 or 9, further comprising a taste potentiator and/or a high-intensity sweetener.

11. The confectionery of claim 10, wherein the taste potentiator comprises 3-hydroxybenzoic acid and a dihydroxybenzoic acid selected from the group consisting of 2,4-dihydroxybenzoic acid, 3,4-dihydroxybenzoic acid, and combinations thereof; and/or wherein the high-intensity sweetener is selected from the group consisting of the potassium salt of 3,4-dihydro-6-methyl-1,2,3-oxathiazine-4-one-2,2-dioxide, L-aspartyl-L-phenylalanine methyl ester, L-alpha-aspartyl-N-(2,2,4,4-tetramethyl-3 - thietanyl)-D-alaninamide hydrate, N-[N-(3,3-dimethylbutyl)-L-aspartyl]-L-phenylalanine 1-methyl ester, chlorinated derivatives of sucrose, thaumatin, monatin, mogrosides, and combinations thereof.

12. The beverage of claim 10, wherein the taste potentiator comprises 3-hydroxybenzoic acid and a dihydroxybenzoic acid selected from the group consisting of 2,4-dihydroxybenzoic acid, 3,4-dihydroxybenzoic acid, and combinations thereof.

13. The confectionery or beverage of any of claims 8-12, comprising about 0.001 to about 10 weight percent of the first cooling agent and about 0.001 to about 10 weight percent of the second cooling agent, based on the total weight of the confectionery or beverage.

14. The confectionery of claim 8,
wherein the second cooling agent comprises N-ethyl-2,2-diisopropylbutanamide; and
wherein the confectionery further comprises a throat care agent or throat-soothing agent, or an allergy relief agent

## Patentansprüche

1. Kaugummi mit:
einem Elastomer; und
einem ersten Kühlmittel mit der Struktur 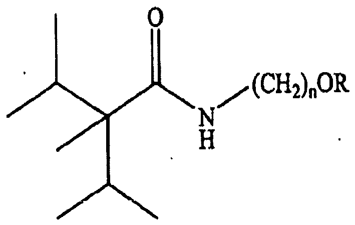
wobei R ein C₁-C₆-Alkyl ist, und n 2 oder 3 ist; wobei das erste Kühlmittel eine Wasserlöslichkeit bei 25 °C von etwa 0,05 bis etwa 10 g/l aufweist; und
einem zweiten Kühlmittel mit einer Wasserlöslichkeit bei 25 °C, die von der Wasserlöslichkeit des ersten Kühlmittels zumindest um eine Faktor 2 abweicht;
wobei das zweite Kühlmittel ausgewählt ist aus der Gruppe bestehend aus Menthol, N-ethyl-p-menthan-3-carboxamid, dem Ethylester von N-[[5-Methyl-2-(1-methylethyl]cyclohexyl]carbonyl]glycin, N-ethyl-2,2-diisopropylbutanamid, N-(1,1-dimethyl-2-hydroxyethyl)-2,2-diethylbutanamid und Kombinationen davon.

2. Kaugummi nach Anspruch 1, wobei das erste Kühlmittel ausgewählt ist aus der Gruppe bestehend aus N-(2-hydroxyethyl)-2-isopropyl-2,3-dimethylbutanamid, N-(3-ethoxypropyl)-2-isopropyl-2,3-dimethylbutanamid, N-(3-propoxypropyl)-2-isopropyl-2,3-dimethylbutanamid, N-(3-butoxypropyl)-2-isopropyl-2,3-dimethylbutanamid und Kombinationen davon.

3. Kaugummi nach Anspruch 1 oder Anspruch 2, mit etwa 0,001 bis etwa 15 Gew.-% des ersten Kühlmittels, basierend auf dem Gesamtgewicht des Kaugummis.

4. Kaugummi nach einem der Ansprüche 1 - 3, wobei das erste Kühlmittel mit einer abgabemodifizierenden Technik behandelt wurde, die ausgewählt ist aus der Gruppe bestehend aus Verkapselung durch Sprühtrocknen, Fließbettbeschichten, Sprühabkühlung oder Koazervation, um eine vollständige oder teilweise Verkapselung zu erhalten; Agglomeration, um eine teilweise Verkapselung zu erhalten; Fixierung oder Adsorption, um eine teilweise Verkapselung zu erhalten; Einschluss durch Extrusion, und Adsorption auf Silica oder einem Zeolith.

5. Kaugummi nach einem der Ansprüche 1 - 4, mit einem Kühlmittelabgabesystem mit dem ersten Kühlmittel und einem Verkapselungsmaterial mit einer Wasseradsorption von etwa 5 bis etwa 50 % gemessen nach ASTM D570-98.

6. Kaugummi nach einem der Ansprüche 1 - 5, ferner mit einem Geschmacksverstärker und/oder einem Hochintensivsüßstoff.

7. Kaugummi nach einem der Ansprüche 1 - 5, ferner mit einem Hochintensivsüßstoff und einem Geschmacksverstärker.

8. Konfektware oder Getränk, mit:
einem ersten Kühlmittel mit der Struktur 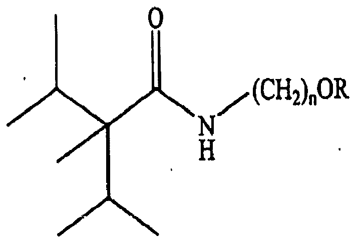
wobei R ein C₁-C₆-Alkyl ist, und n 2 oder 3 ist; wobei das erste Kühlmittel eine Wasserlöslichkeit bei 25 °C von etwa 0,05 bis etwa 10 g/l aufweist; und
einem zweiten Kühlmittel mit einer Wasserlöslichkeit bei 25 °C, die von der Wasserlöslichkeit des ersten Kühlmittels zumindest um eine Faktor 2 abweicht;
wobei das zweite Kühlmittel ausgewählt ist aus der Gruppe bestehend aus Menthol, N-ethyl-p-menthan-e-carboxamid, dem Ethylester von N-[[5-methyl-2-(1-methylethyl)cyclohexyl]carbonyl]glycin, N-ethyl-2,2-diisopropylbutanamid, N-(1,1-dimethyl-2-hydroxyethyl)-2,2-diethylbutanamid und Kombinationen davon.

9. Konfektware oder Getränk nach Anspruch 8, wobei das erste Kühlmittel ausgewählt ist aus der Gruppe bestehend aus N-(2-hydroxyethyl)-2-isopropyl-2,3-dimethylbutanamid, N-(3-ethoxypropyl)-2-isopropyl-2,3-dimethylbutanamid, N-(3-propoxypropyl)-2-isopropyl-2,3-dimethylbutanamid, N-(3-butoxypropyl)-2-isopropyl-2,3-dimethylbutanamid und Kombinationen davon.

10. Konfektware oder Getränk nach Anspruch 8 oder 9, ferner mit einem Geschmacksverstärker und/oder einem Hochintensivsüßstoff.

11. Konfektware nach Anspruch 10, wobei der Geschmacksverstärker 3-Hydroxybenzosäure und eine Dihydroxybenzosäure ausgewählt aus der Gruppe bestehend aus 2,4-Dihydroxybenzosäure, 3,4-Dihydroxybenzosäure und/oder Kombinationen davon ausgewählt ist; und/oder wobei der Hochintensivsüßstoff ausgewählt ist aus der Gruppe bestehend aus Kaliumsalz von 3,4-Dihydro-6-methyl-1,2,3-oxathiazin-4-on-2,2-dioxid, L-Aspartyl-L-phenylalaninmethylester, L-Alpha-aspartyl-N-(2,2,4,4-tetramethyl-3-thiethanyl)-D-alaninamidhydrat,N-[N-(3,3-dimethylbutyl)-L-aspartyl]-L-phenylalanin-1-methylester, chlorierten Derivaten von Sucrose, Thaumatin, Monatin, Mogrosiden und Kombinationen davon.

12. Getränk nach Anspruch 10, wobei der Geschmacksverstärker 3-Hydroxybenzosäure und eine Dihydroxybenzosäure ausgewählt aus der Gruppe bestehend aus 2,4-Dihydroxybenzosäure, 3,4-Dihydroxybenzosäure und Kombinationen davon enthält.

13. Konfektware oder Getränk nach einem der Ansprüche 8 - 12, mit etwa 0,001 bis etwa 10 Gew.-% des ersten Kühlmittels und etwa 0,001 bis etwa 10 Gew.-% des zweiten Kühlmittels, basierend auf dem Gesamtgewicht der Konfektware oder des Getränks.

14. Konfektware nach Anspruch 8, wobei das zweite Kühlmittel N-ethyl-2,2-diisopropylbutanamid enthält; und
wobei die Konfektware ferner ein Rachenpflegemittel oder Rachenberuhigungsmittel oder ein Allergielinderungsmittel enthält.

## Revendications

1. Gomme à mâcher comprenant :
un élastomère ; et
un premier agent rafraichissant ayant la structure 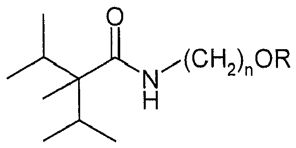 où R est un alkyle en C₁ à C₆, et n vaut 2 ou 3 ; le premier agent rafraichissant ayant une solubilité dans l'eau à 25°C d'environ 0,05 à environ 10 grammes par litre ; et
un deuxième agent rafraichissant ayant une solubilité dans l'eau à 25°C qui diffère de la solubilité dans l'eau du premier agent rafraichissant d'au moins un facteur de 2 ; le deuxième agent rafraichissant étant choisi dans le groupe constitué par le menthol, le N-éthyl-p-menthane-3-carboxamide, l'ester éthylique de N-[[5-méthyl-2-(1-méthyléthyl)cyclohexyl]carbonyl]glycine, le N-éthyl-2,2-diisopropylbutanamide, le N-(1,1-diméthyl-2-hydroxyéthyl)-2,2-diéthylbutanamide, et leurs combinaisons.

2. Gomme à mâcher selon la revendication 1, dans laquelle le premier agent rafraichissant est choisi dans le groupe constitué par le N-(2-hydroxyéthyl)-2-isopropyl-2,3-diméthylbutanamide, le N-(3-éthoxypropyl)-2-isopropyl-2,3-diméthylbutanamide, le N-(3-propoxypropyl)-2-isopropyl-2,3-diméthylbutanamide, le N-(3-butoxypropyl)-2-isopropyl-2,3-diméthylbutanamide, et leurs combinaisons.

3. Gomme à mâcher selon la revendication 1 ou 2, comprenant d'environ 0,001 à environ 15 % en poids du premier agent rafraichissant, sur la base du poids total de la gomme à mâcher.

4. Gomme à mâcher selon l'une quelconque des revendications 1 à 3, dans laquelle le premier agent rafraichissant a été traité avec une technique modifiant la libération, choisie dans le groupe constitué par une encapsulation par séchage par pulvérisation, un enrobage en lit fluidisé, un refroidissement par pulvérisation, ou une coacervation pour obtenir une encapsulation complète ou partielle ; une agglomération pour obtenir une encapsulation partielle ; une fixation ou une absorption pour obtenir une encapsulation partielle ; un piégeage par extrusion ; et une adsorption sur de la silice ou une zéolite.

5. Gomme à mâcher selon l'une quelconque des revendications 1 à 4, comprenant un système de délivrance d'agent rafraichissant comprenant le premier agent rafraichissant et un matériau d'encapsulation ayant une absorption d'eau d'environ 5 à environ 50 %, mesurée conformément à la norme ASTM D570-98.

6. Gomme à mâcher selon l'une quelconque des revendications 1 à 5, comprenant en outre un exhausteur de goût et/ou un édulcorant de haute intensité.

7. Gomme à mâcher selon l'une quelconque des revendications 1 à 5, comprenant en outre un édulcorant de haute intensité et un exhausteur de goût.

8. Confiserie ou boisson comprenant
un premier agent rafraichissant ayant la structure 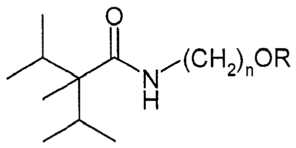 où R est un alkyle en C₁ à C₆, et n vaut 2 ou 3 ; le premier agent rafraichissant ayant une solubilité dans l'eau à 25°C d'environ 0,05 à environ 10 grammes par litre ; et
un deuxième agent rafraichissant ayant une solubilité dans l'eau à 25°C qui diffère de la solubilité dans l'eau du premier agent rafraichissant d'au moins un facteur de 2 ; le deuxième agent rafraichissant étant choisi dans le groupe constitué par le menthol, le N-éthyl-p-menthane-3-carboxamide, l'ester éthylique de N-[[5-méthyl-2-(1-méthyléthyl)cyclohexyl]carbonyl]glycine, le N-éthyl-2,2-diisopropylbutanamide, le N-(1,1-diméthyl-2-hydroxyéthyl)-2,2-diéthylbutanamide, et leurs combinaisons.

9. Confiserie ou boisson selon la revendication 8, dans laquelle le premier agent rafraichissant est choisi dans le groupe constitué par le N-(2-hydroxyéthyl)-2-isopropyl-2,3-diméthylbutanamide N-(3-éthoxypropyl)-2-isopropyl-2,3-diméthylbutanamide, le N-(3-propoxypropyl)-2-isopropyl-2,3-diméthylbutanamide, le N-(3-butoxypropyl)-2-isopropyl-2,3-diméthylbutanamide, et leurs combinaisons.

10. Confiserie ou boisson selon la revendication 8 ou 9, comprenant en outre un exhausteur de goût et/ou un édulcorant de haute intensité.

11. Confiserie selon la revendication 10, dans laquelle l'exhausteur de goût comprend de l'acide 3-hydroxybenzoïque et un acide dihydroxybenzoïque choisi dans le groupe constitué par l'acide 2,4-dihydroxybenzoïque, l'acide 3,4-dihydroxybenzoïque, et leurs combinaisons ; et/ou dans laquelle l'édulcorant de haute intensité est choisi dans le groupe constitué par le sel de potassium du 3,4-dihydro-6-méthyl-1,2,3-oxathiazine-4-one-2,2-dioxyde, l'ester méthylique de L-aspartyl-L-phénylalanine, l'hydrate de L-α-aspartyl-N-(2,2,4,4-tétraméthyl-3-thiétanyl)-D-alaninamide, l'ester 1-méthylique de N-[N-(3,3-diméthylbutyl)-L-aspartyl]-L-phénylalanine, les dérivés chlorés de saccharose, la thaumatine, la monatine, les mogrosides, et leurs combinaisons.

12. Boisson selon la revendication 10, dans laquelle l'exhausteur de goût comprend de l'acide 3-hydroxybenzoïque et un acide dihydroxybenzoïque choisi dans le groupe constitué par l'acide 2,4-dihydroxybenzoïque, l'acide 3,4-dihydroxybenzoïque, et leurs combinaisons.

13. Confiserie ou boisson selon l'une quelconque des revendications 8 à 12, comprenant d'environ 0,001 à environ 10 % en poids du premier agent rafraichissant et d'environ 0,001 à environ 10 % en poids du deuxième agent rafraichissant, sur la base du poids total de la confiserie ou de la boisson.

14. Confiserie selon la revendication 8, dans laquelle le deuxième agent rafraichissant comprend du N-éthyl-2,2-diisopropylbutanamide ; et
laquelle confiserie comprend en outre un agent de soin de la gorge ou un agent apaisant la gorge, ou un agent soulageant une allergie.
